(19) Europäisches Patentamt
European Patent Office
Office européen des brevets

(11) **EP 4 604 533 A1**

(12) **EUROPEAN PATENT APPLICATION**
published in accordance with Art. 153(4) EPC

(43) Date of publication:
**20.08.2025 Bulletin 2025/34**

(21) Application number: **22961751.9**

(22) Date of filing: **13.10.2022**

(51) International Patent Classification (IPC):
**H04N 19/52** (2014.01)   **H04N 19/105** (2014.01)
**H04N 19/593** (2014.01)   **H04N 19/176** (2014.01)

(52) Cooperative Patent Classification (CPC):
**H04N 19/105; H04N 19/176; H04N 19/52;
H04N 19/593**

(86) International application number:
**PCT/CN2022/125187**

(87) International publication number:
**WO 2024/077562 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **WANG, Fan
Dongguan, Guangdong 523860 (CN)**

(74) Representative: **Taor, Simon Edward William et al
Venner Shipley LLP
200 Aldersgate
London EC1A 4HD (GB)**

(54) **CODING METHOD AND APPARATUS, DECODING METHOD AND APPARATUS, CODER,
DECODER, CODE STREAM, AND STORAGE MEDIUM**

(57)   A coding method and apparatus, a decoding method and apparatus, a coder, a decoder, a code stream, and a storage medium. The decoding method comprises: determining a first reference block of the current block; obtaining a first intra-frame prediction value of the current block according to a sample value of a reconstructed area adjacent to the current block and a sample value of the first reference block; and determining a reconstruction value of the current block according to the first intra-frame prediction value of the current block.

**FIG. 18**

**Description**

TECHNICAL FIELD

Embodiments of the disclosure relate to video picture technologies, and relate to, but are not limited to, a coding method and apparatus, a decoding method and apparatus, a coder, a decoder, a bitstream, and a storage medium.

BACKGROUND

In the field of video coding and decoding, how to enhance efficiency of video compression is of vital importance. During digitization of pictures and videos, a large amount of data redundancies are generated, which makes video compression technologies possible. There is a strong spatial correlation between neighbouring parts or neighbouring pixels within the picture. The intra prediction is a prediction method which uses a spatial correlation between coded and decoded pixels around a current block and pixels within the current block, thereby reducing a spatial redundancy in the video coding based on prediction results. However, the intra prediction in existing video coding and decoding standards has a problem of poor video coding and decoding performance. Therefore, it still has a significance of studying how to further improve the accuracy of the intra prediction to enhance the video coding and decoding performance.

SUMMARY

A coding method and apparatus, a decoding method and apparatus, a coder, a decoder, a bitstream, and a storage medium provided in embodiments of the disclosure may improve the accuracy of the intra prediction and thus enhance the video coding and decoding performance. The coding method and apparatus, the decoding method and apparatus, the coder, the decoder, the bitstream, and the storage medium provided in the embodiments of the disclosure are implemented as follows.

According to an aspect of the embodiments of the disclosure, a decoding method is provided. The method is applied to a decoder and includes the following operations. A first reference block of a current block is determined. A first intra prediction value of the current block is obtained according to sample values of a reconstructed area neighbouring the current block and a sample value of the first reference block. A reconstructed value of the current block is determined according to the first intra prediction value of the current block.

According to another aspect of the embodiments of the disclosure, a decoding method is provided. The method is applied to a decoder and includes the following operations. Multiple reference blocks of a current block are determined. The multiple reference blocks are located in a picture where the current block is located. A first intra prediction value of the current block is obtained according to sample values of the multiple reference blocks. A reconstructed value of the current block is determined according to the first intra prediction value of the current block.

According to yet another aspect of the embodiments of the disclosure, a coding method is provided. The method is applied to a coder and includes the following operations. A first reference block of a current block is determined. A first intra prediction value of the current block is obtained according to sample values of a reconstructed area neighbouring the current block and a sample value of the first reference block. A residual value of the current block is obtained according to the first intra prediction value of the current block and a sample value of the current block. A bitstream is generated according to the residual value.

According to still another aspect of the embodiments of the disclosure, a coding method is provided. The method is applied to a coder and includes the following operations. Multiple reference blocks of a current block are determined. The multiple reference blocks are located in a picture where the current block is located. A first intra prediction value of the current block is obtained according to sample values of the multiple reference blocks. A residual value of the current block is obtained according to the first intra prediction value of the current block and a sample value of the current block. A bitstream is generated according to the residual value.

According to another aspect of the embodiments of the disclosure, a decoding apparatus is provided. The apparatus is applied to a decoder and includes a first determination module, a first prediction module, and a second determination module. The first determination module is configured to determine a first reference block of a current block. The first prediction module is configured to obtain a first intra prediction value of the current block according to sample values of a reconstructed area neighbouring the current block and a sample value of the first reference block. The second determination module is configured to determine a reconstructed value of the current block according to the first intra prediction value of the current block.

According to yet another aspect of the embodiments of the disclosure, a decoding apparatus is provided. The apparatus is applied to a decoder and includes a third determination module, a second prediction module, and a second determination module. The third determination module is configured to determine multiple reference blocks of a current block. The multiple reference blocks are located in a picture where the current block is located. The second prediction module is configured to obtain a first intra prediction value of the current block according to sample values of the multiple reference blocks. The second determination module is configured to determine a reconstructed value of the current block according to the first intra prediction value of the current block.

According to still another aspect of the embodiments of the disclosure, a decoder is provided. The decoder includes a first memory and a first processor. The first memory is configured to store a computer program executable on the first processor. The first processor is configured to perform the decoding method described in the embodiments of the disclosure when executing the computer program.

According to another aspect of the embodiments of the disclosure, a coding apparatus is provided. The apparatus is applied to a coder and includes a first determination module, a first prediction module, and a generation module. The first determination module is configured to determine a first reference block of a current block. The first prediction module is configured to obtain a first intra prediction value of the current block according to sample values of a reconstructed area neighbouring the current block and a sample value of the first reference block. The generation module is configured to obtain a residual value of the current block according to the first intra prediction value of the current block and a sample value of the current block, and generate a bitstream according to the residual value.

According to yet another aspect of the embodiments of the disclosure, a coding apparatus is provided. The apparatus is applied to a coder and includes a third determination module, a second prediction module, and a generation module. The third determination module is configured to determine multiple reference blocks of a current block. The multiple reference blocks are located in a picture where the current block is located. The second prediction module is configured to obtain a first intra prediction value of the current block according to sample values of the multiple reference blocks. The generation module is configured to obtain a residual value of the current block according to the first intra prediction value of the current block and a sample value of the current block, and generate a bitstream according to the residual value.

According to still another aspect of the embodiments of the disclosure, a coder is provided. The coder includes a second memory and a second processor. The second memory is configured to store a computer program executable on the second processor. The second processor is configured to perform the coding method described in the embodiments of the disclosure when executing the computer program.

According to another aspect of the embodiments of the disclosure, a bitstream is provided. The bitstream is generated a residual value between a first intra prediction value of a current block and a sample value of the current block. The first intra prediction value is obtained through the coding method described in the embodiments of the disclosure.

According to yet another aspect of the embodiments of the disclosure, an electronic device is provided. The electronic device includes a processor and a computer-readable storage medium. The processor is configured to execute a computer program. The computer-readable storage medium has stored thereon a computer program. When the computer program is executed by the processor, the coding method described in the embodiments of the disclosure is implemented. Alternatively, when the computer program is executed by the processor, the decoding method described in the embodiments of the disclosure is implemented.

According to still another aspect of the embodiments of the disclosure, a computer-readable storage medium is provided. The computer-readable storage medium has stored thereon a computer program. When the computer program is executed, the coding method described in the embodiments of the disclosure is implemented. Alternatively, when the computer program is executed, the decoding method described in the embodiments of the disclosure is implemented.

It should be understood that the foregoing general descriptions and the following detailed descriptions are only exemplary and explanatory, and cannot limit the disclosure.

BRIEF DESCRIPTION OF THE DRAWINGS

The drawings here are incorporated into the description and constitute a part of the description, and these drawings show the embodiments consistent with the disclosure and are intended to explain the technical solutions of the disclosure together with the description. It is apparent that the drawings described below are only some embodiments of the disclosure, and other drawings may also be obtained by those of ordinary skill in the art according to these drawings without paying any creative work.

The flowcharts shown in the drawings are only exemplary explanations and do not necessarily include all the contents and operations/steps, nor are they necessarily performed in the described order. For example, some operations/-steps may also be decomposed, and some operations/steps may be combined or partially combined. Therefore the actual execution order may be changed according to actual situations.

FIG. 1 is a schematic diagram of a basic flow of a video codec.
FIG. 2 is a schematic diagram of a position relationship between a current block and a reference pixel.
FIG. 3 is a schematic diagram of using four reference rows/columns in an intra prediction method.
FIG. 4 is a schematic diagram of 9 modes of performing intra prediction on a $4 \times 4$ block in H.264.

FIG. 5 is a schematic diagram of 35 intra prediction modes used in High Efficiency Video Coding (HEVC).

FIG. 6 is a schematic diagram of 67 intra modes used in Versatile Video Coding (VVC).

FIG. 7 is a schematic diagram of wide angle modes.

FIG. 8 is a schematic diagram of 66 prediction modes used in AVS3.

FIG. 9 is a schematic diagram of a screen content.

FIG. 10 is a schematic diagram of inter prediction.

FIG. 11 is a schematic diagram of intra Template Matching Prediction (intraTMP).

FIG. 12 is a schematic diagram of a picture of a floor.

FIG. 13 is a schematic diagram of a picture of a wallboard.

FIG. 14 is a schematic flowchart of an implementation of a coding method provided in an embodiment of the disclosure.

FIG. 15A is a schematic diagram showing that a position of a first reference block in a composition area relative to a reconstructed area is consistent with a position of a current block relative to the reconstructed area provided in an embodiment of the disclosure.

FIG. 15B is a schematic diagram of filtering provided in an embodiment of the disclosure.

FIG. 16 is a schematic diagram of an implementation embodiment 2 provided in an embodiment of the disclosure.

FIG. 17 is a schematic flowchart of an implementation of a coding method provided in an embodiment of the disclosure.

FIG. 18 is a schematic flowchart of an implementation of a decoding method provided in an embodiment of the disclosure.

FIG. 19 is a schematic flowchart of an implementation of a decoding method provided in an embodiment of the disclosure.

FIG. 20 is a schematic diagram of a position relationship between a current block and its surrounding reconstructed pixel areas.

FIG. 21 is a schematic structural diagram of a decoding apparatus provided in an embodiment of the disclosure.

FIG. 22 is a schematic structural diagram of another decoding apparatus provided in an embodiment of the disclosure.

FIG. 23 is a schematic structural diagram of a coding apparatus provided in an embodiment of the disclosure.

FIG. 24 is a schematic structural diagram of a coding apparatus provided in an embodiment of the disclosure.

FIG. 25 is a schematic structural diagram of a decoder provided in an embodiment of the disclosure.

FIG. 26 is a schematic structural diagram of a coder provided in an embodiment of the disclosure.

DETAILED DESCRIPTION

In order to make the purpose, technical solutions and advantages of the embodiments of the disclosure clearer, specific technical solutions of the disclosure will be further described in detail below with reference to the drawings in the embodiments of the disclosure. The following embodiments are intended to explain the disclosure, but not to limit the scope of the disclosure.

Unless otherwise defined, all the technical and scientific terms used here have the same meaning as usually understood by technicians in the technical field to which the disclosure belongs. The terms used here are only for the purpose of describing the embodiments of the disclosure, and are not intended to limit the disclosure.

In the following descriptions, reference is made to exemplary descriptions such as "some embodiments", or "in some other embodiments", or "in an example", or the like which describe a subset of all the possible embodiments. However, it may be understood that "some embodiments" may be the same or different subsets of all the possible embodiments, and may be combined with each other without conflict.

It should be noted that terms "first\second\third" or the like involved in the embodiments of the disclosure are intended to distinguish similar or different objects, and do not represent a specific order of the objects. It may be understood that specific orders or sequences of "first\second\third" or the like may be interchanged if allowable, so that the embodiments of the disclosure described here may be implemented in an order besides that shown or described here.

Frameworks of a coder and a decoder and business scenarios described in the embodiments of the disclosure are intended to explain the technical solutions of the embodiments of the disclosure more clearly, and do not constitute a limitation on the technical solutions provided in the embodiments of the disclosure. It may be known by those of ordinary skill in the art that with the evolution of the coder and the decoder and the emergence of new business scenarios, the technical solutions provided in the embodiments of the disclosure are also applicable to similar technical problems.

Most video coding and decoding standards adopt a block-based hybrid coding framework. Each picture or sub-picture or frame in the video is divided into square Largest Coding Units (LCUs) or Coding Tree Units (CTUs) of the same size (such as 128×128, or 64×64, etc.). Each LCU or CTU may be divided into rectangular Coding Units (CUs) according to a rule. The CU may also be divided into Prediction Units (PUs) and/or Transform Units (TUs), etc. The hybrid coding framework includes modules such as a prediction module, a transform module, a quantization module, an entropy coding module, an in-loop filter module, etc. The prediction module includes intra prediction and inter prediction. The inter prediction includes motion estimation and motion compensation. Since there is a strong correlation between neighbouring pixels in a frame of the video, an intra prediction method is used in the video coding and decoding technologies to eliminate a spatial redundancy between neighbouring pixels. Since there is a strong similarity between neighbouring frames in the video, an inter prediction method is used in the video coding and decoding technologies to eliminate the temporal redundancy between neighbouring frames, thereby improving the coding and decoding efficiency.

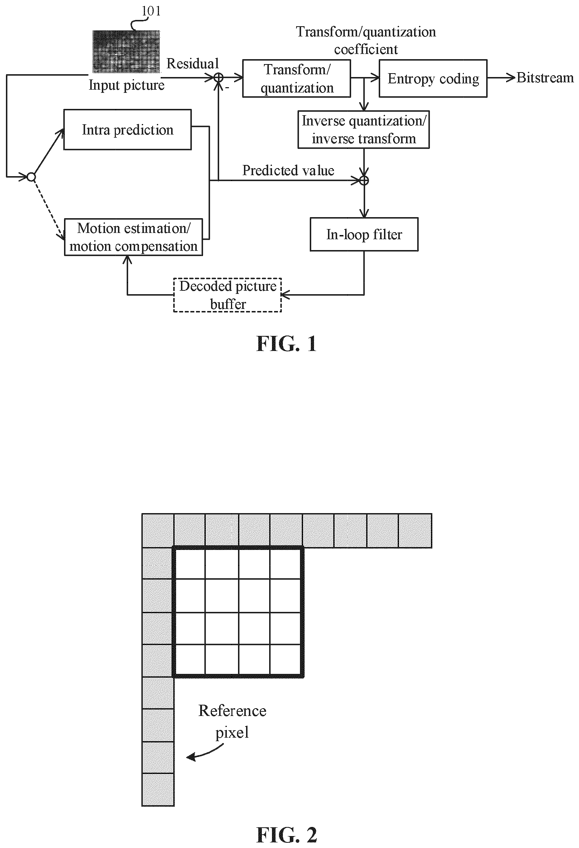

A basic flow of a video codec is shown in FIG. 1. At a coding side, a frame of picture 101 is divided into blocks, and the intra prediction or inter prediction is used on a current block to generate a prediction block of the current block. The prediction block is subtracted from an original block of the current block to obtain a residual block. The residual block is transformed and quantized to obtain a quantization coefficient matrix. The quantization coefficient matrix is entropy coded and output to a bitstream. At a decoding side (not shown in the figure), the intra prediction or inter prediction is used on the current block to generate a prediction block of the current block. On the other hand, the bitstream is parsed to obtain a quantization coefficient matrix. The quantization coefficient matrix is inversely quantized and inversely transformed to obtain a residual block. The prediction block and the residual block are added to obtain a reconstructed block. The reconstructed blocks constitute a reconstructed picture, and the in-loop filtering is performed on the reconstructed picture based on the picture or block to obtain a decoded picture. The coding side also requires similar operations as the decoding side to obtain a decoded picture. At the coding side, the obtained decoded picture may be used as a reference picture of the inter prediction of subsequent frames. Block division information determined at the coding side, and mode information or parameter information such as prediction, transform, quantization, entropy coding, in-loop filtering, or the like need to be in the output bitstream if necessary. The decoding side determines the same block division information, and mode information or parameter information such as prediction, transform, quantization, entropy coding, in-loop filtering, or the like as the coding side by parsing and analyzing according to the existing information, thereby ensuring that the decoded picture obtained by the coding side is the same as the decoded picture obtained by the decoding side. The decoded picture obtained by the coding side is also usually referred to as the reconstructed picture. During the prediction, the current block may be divided into PUs, and during transform, the current block may be divided into TUs. Division of PUs may be different from division of TUs.

The above descriptions are the basic flow of the video codec under the block-based hybrid coding framework. With the development of technologies, some modules or steps of the framework or flow may be optimized. The coding and decoding methods provided in the embodiments of the disclosure are applicable to the basic flow of the video codec under the block-based hybrid coding framework, but are not limited to the framework and flow. It may be known by those of ordinary skill in the art that with the evolution of the coder and the decoder and the emergence of new business scenarios, the methods provided in the embodiments of the disclosure are also applicable to similar technical problems.

The current block may be a current CU, or a current PU, etc.

It may be understood that there is a strong spatial correlation between neighbouring parts or neighbouring pixels within the picture. The intra prediction is a method of performing the prediction by using a spatial correlation between coded and decoded pixels around the current block and pixels within the current block. For example, as shown in FIG. 2, the white $4\times4$ block is the current block, and gray pixels in a left column and an upper row of the current block are reference pixels of the current block. The intra prediction uses these reference pixels to predict the current block. These reference pixels may be all available, that is, all of these reference pixels have been coded and decoded. Alternatively, a part of these reference pixels may be unavailable, for example, the current block is a leftmost one of the entire frame, and then reference pixels at a left side of the current block are unavailable. Alternatively, when the current block is coded and decoded, a lower left part of the current block has not been coded and decoded, and then reference pixels at a lower left side are also unavailable. In a case that the reference pixels are unavailable, available reference pixels or certain values or certain methods may be used for filling, or the filling is not performed.

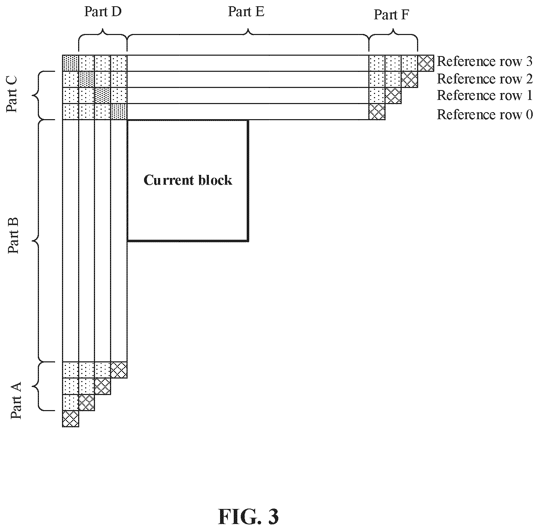

An intra prediction method of Multiple Reference Line (MRL) may use more reference pixels, thereby improving the coding efficiency. As shown in FIG. 3, there is an example of using four reference rows/columns.

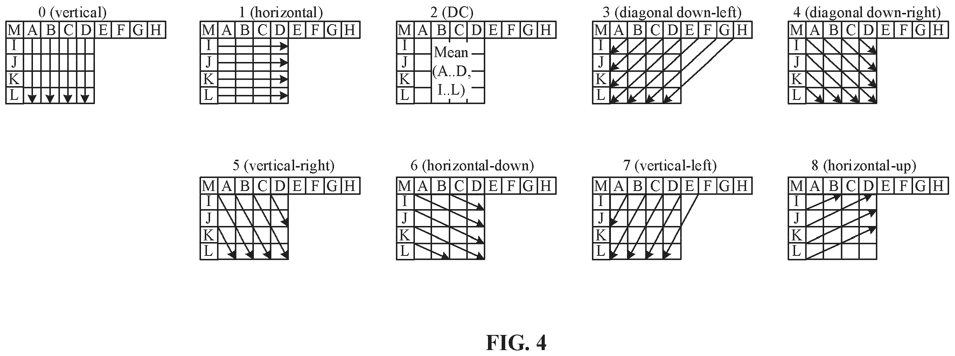

There are multiple prediction modes for the intra prediction. As shown in FIG. 4, there are 9 modes of performing the intra prediction on a $4\times4$ block in H.264. Mode 0 includes copying pixels above the current block to the current block along a vertical direction as a prediction value. Mode 1 includes copying reference pixels at a left side to the current block along a horizontal direction as a prediction value. Mode 2 (i.e., DC mode) includes using an average value of 8 points A to D and I to L as a prediction value of all the points. Modes 3 to 8 include copying the reference pixels to corresponding positions of the current block at a certain angle respectively (therefore, modes 3 to 8 are also referred to as the angular prediction modes). Since some positions of the current block cannot correspond to the reference pixels exactly, it may be necessary to use a weighted average value of the reference pixels, or sub-pixels of interpolated reference pixels.

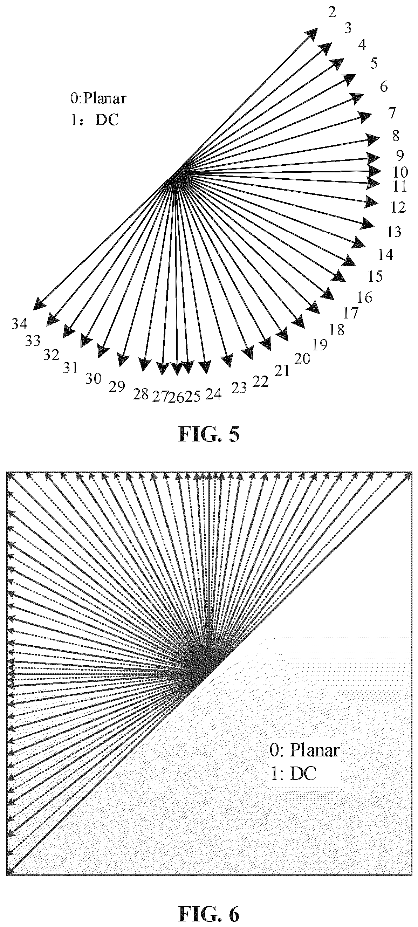

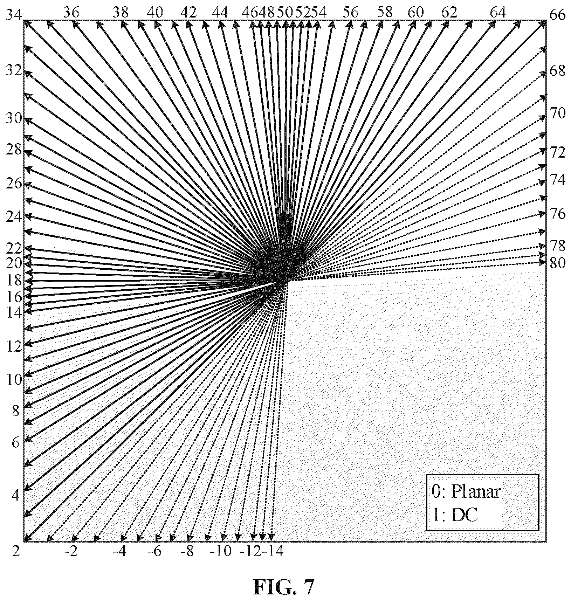

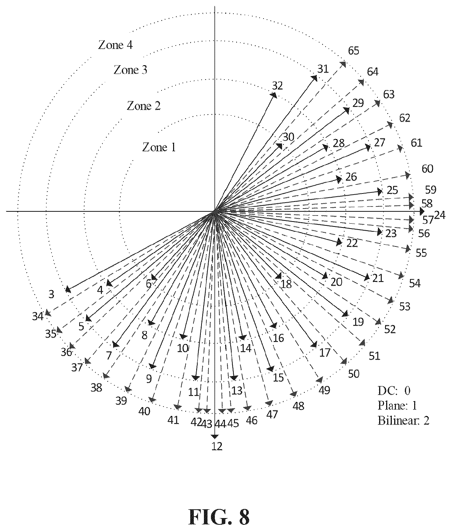

In addition, there are a Plane mode, a Planar mode, etc. With the development of technologies and the expansion of blocks, there are more and more angular prediction modes. As shown in FIG. 5, the intra prediction modes used in High Efficiency Video Coding (HEVC) include a total of 35 prediction modes, i.e., a Planar mode, a Direct Current (DC) mode and 33 angular modes. As shown in FIG. 6, the intra modes used in Versatile Video Coding (VVC) include a total of 67 prediction modes, i.e., a Planar mode, a DC mode and 65 angular modes. Of course, in addition to the above 67 modes, VVC further provides wide angle modes for some rectangular blocks with a large difference in length and width. For example, the modes indicated by the dotted lines in FIG. 7, which are two intervals of - 14 to -1 and 67 to 80, may replace some conventional modes. As shown in FIG. 8, AVS3 uses a total of 66 prediction modes, i.e., a DC mode, a Plane mode, a Bilinear mode, a Pulse Code Modulation (PCM) mode and 62 angular modes.

A video is composed of multiple pictures. In order to make the video watched smoothly, each second of video contains dozens or even hundreds of frames of pictures, such as 24 frames per second (FPS), 30 FPS, 50 FPS, 60 FPS, or 120 FPS, etc. Therefore, there is a very obvious temporal redundancy in the video. Alternatively, in other words, there is a large temporal correlation in the video. The inter prediction uses this temporal correlation to improve the compression efficiency. The inter prediction often uses "motion" to use the temporal correlation. A very simple "motion" model is that an object is at a certain position on a picture corresponding to a certain moment, and after a certain period of time, the object translates to another position on the picture corresponding to this moment. This is a basic and commonly used translation motion in the video coding and decoding. The inter prediction uses the motion information to represent "motion". The basic motion information includes information of a reference frame (or, referred to as a reference picture) and information of a Motion Vector (MV). The codec determines the reference picture according to the information of the reference picture, and determines a coordinate of a reference block according to the information of the MV and a coordinate of the current block. The reference block is determined by using the coordinate of the reference block in the reference picture. Taking the determined reference block as a prediction block is a most basic prediction method for the inter prediction.

The motion in the video is not always such simple motion. Even the motion considered as translation may have slight variations over time, including slight deformation, variation of luma, variation of noise, etc. More than one reference block may be used to predict the current block, thereby achieving a better prediction effect. For example, in bidirectional prediction, two reference blocks are used to predict the current block. The two reference blocks may use a forward reference block and a backward reference block. It is also allowable that the two reference blocks are both forward reference blocks or backward reference blocks. The so-called "forward" refers to that a time corresponding to the reference picture occurs before a current frame, and "backward" refers to that the time corresponding to the reference picture occurs after the current frame. Alternatively, "forward" refers to that a position of the reference picture in the video occurs before the current frame, and "backward" refers to that the position of the reference picture in the video occurs after the current frame. Alternatively, "forward" refers to that a picture order count (POC) of the reference picture is less than a POC of the current frame, and "backward" refers to that the POC of the reference picture is greater than the POC of the current frame. Future video coding and decoding standards may support prediction of multiple reference blocks. A simple method for generating a prediction block by using two reference blocks is to average pixel values at positions corresponding to the two reference blocks to obtain the prediction block. In order to obtain a better prediction result, weighted averaging may also be used, such as Bi-prediction with CU-level Weight (BCW) used in VVC. A Geometric Partitioning Mode (GPM) in the VVC may also be understood as a special bidirectional prediction. In order to use the bidirectional prediction, it is naturally necessary to find two reference blocks, and then two sets of information of reference pictures and information of MVs are required.

The motion in the video is not only a simple translation, but also includes scaling, rotation, distortion, deformation and various complex motions. Affine is used in the VVC to simulate some of simple motions. An affine model in the VVC uses two or three control points, and derives MV of each sub-block in the current block by using a linear model according to these control points. A reason why only the MV is mentioned here instead of the motion information is because both of them point to the same reference picture. It may be understood that an ordinary translational motion is to find a "whole block" from the reference picture, while the affine is to find a set of "sub-blocks" which are not neighbouring one by one from the reference picture. The above descriptions are all in the scope of unidirectional prediction, and the affine may also implement the bidirectional prediction or prediction of more "reference blocks". The reference block mentioned here is composed of sub-blocks. In a specific implementation, the unidirectional motion information in a data structure of affine motion information may include information of a reference picture and information of two to three MVs, or two to three sets of information of reference pictures and information of MVs. However, information of these reference pictures may be the same.

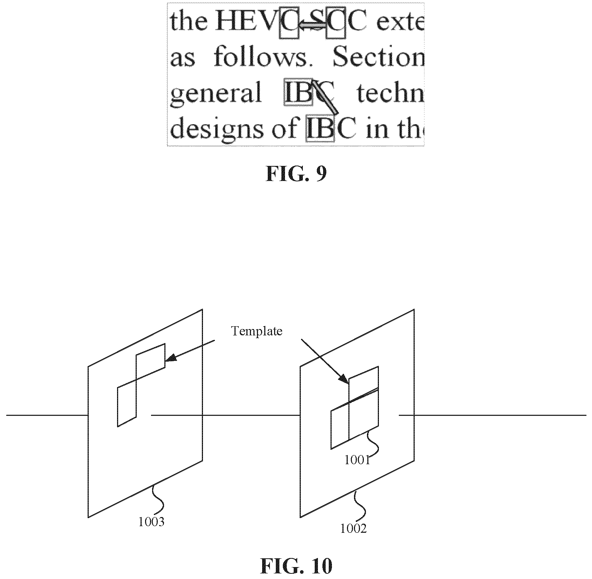

Intra Block Copy (IBC) may significantly improve the compression efficiency of screen content coding, so that the IBC is used for screen content coding from HEVC to VVC. The screen content is different from the camera captured content, and the screen content is generated by a computer. The screen content has no noise, contains text, computer graphics, or the like, and has clear boundaries. There are a lot of repeated contents in the screen content. As shown in FIG. 9, contents in two blocks of the first row are repeated, and the content in the block of the third row is repeated with the content in the block of the fourth row.

As mentioned above, the inter prediction uses the reference block in the reference picture as the prediction block of the current block, and the reference picture is not a current picture. However, the IBC finds a block from coded and decoded parts of the current picture (referred to as reconstructed parts), as the prediction block of the current block. In some situations, the IBC is also referred to as intra picture block compensation or current picture referencing (CPR).

Names of the IBC are not limited in the embodiment, and the above names are equivalent or interchangeable, unless otherwise specially indicated.

The IBC uses a Block Vector (BV) to represent a position difference between the current block and the reference block. The coder determines a best matching block of the current block in a search range through a block matching method, and codes the BV. There are many methods for coding the BV, which are not elaborated here. The IBC may be considered as an intra prediction method, or may be considered as another type of prediction method independent of the intra prediction and the inter prediction.

A Template Matching (TM) method is used in the inter prediction first, which uses a correlation between neighbouring pixels and takes some areas around the current block as templates. When the current block is coded and decoded, left and upper sides of the current block have been coded and decoded according to a coding order. Of course, when it is implemented on a hardware decoder, it is not necessarily ensured that the left and upper sides of the current block have been decoded when decoding of the current block starts. Of course, what mentioned here is an inter block. For example, in HEVC, when an inter coded block generates a prediction block, surrounding reconstructed pixels are not required, therefore a prediction process of the inter block may be carried out in parallel. However, an intra coded block requires reconstructed pixels at the left and upper sides as reference pixels. In theory, the left and upper sides of the current block are available, that is, it may be achieved by making corresponding adjustments to hardware design. Relatively speaking, the right and lower sides of the current block are unavailable in a coding order in the video standard (such as VVC).

As shown in FIG. 10, the rectangular areas at the left and upper sides of the current block 1001 are set as templates. Height of the template part at the left side is usually the same as height of the current block 1001, and width of the template part at the upper side is usually the same as width of the current block 1001. Of course, they may be different. A best matching position of the template is found in a reference frame 1003 of the current frame 1002 to determine motion information or MV of the current block 1001. This process may be roughly described as starting from a start position in a certain reference frame, and searching in a certain range around the position. A search rule may be pre-set, such as a search range, a search step size, etc. Each time it moves to a position, a matching degree of a template corresponding to the position and a template around the current block is calculated. The so-called matching degree may be measured by some distortion costs, such as sum of absolute difference (SAD), sum of absolute transformed difference (SATD), or mean-square error (MSE), etc. The smaller the value of SAD, SATD or MSE, the higher the matching degree. Transform used by the SATD may be Hadamard transform. The cost is calculated by using a prediction block of the template corresponding to the position and a reconstructed block of the template around the current block. In addition to searching for the entire pixel position, searching for the sub-pixel position may also be carried out, and the motion information of the current block is determined according to the searched position with a highest matching degree. Using the correlation between neighbouring pixels, the motion information suitable for the template may also be motion information suitable for the current block. Of course, the template matching method may not necessarily be applicable to all the blocks, therefore some methods may be used to determine whether the current block uses the above template matching method. For example, a control switch is used in the current block to indicate whether the template matching method is used. A template matching technology is for example Decoder side Motion Vector Derivation (DMVD). Both the coder and the decoder may perform search by using the template, so as to derive the motion information or find a better motion information based on the original motion information. However, it is unnecessary to transmit a specific MV or MV difference, instead, both the coder and the decoder perform search based on the same rule to ensure consistency of coding and decoding. The template matching method may improve the compression performance. However, it also requires "searching" in the decoder, which brings a certain degree of complexity of the decoder.

Intra Template Matching Prediction (intraTMP) is also a prediction technology. As mentioned above, the TM may reduce overhead of coding the MV, that is, the TM may reduce overhead of coding the BV. An example is that it is unnecessary to code the BV, and a matching block found by the TM is directly used as a prediction block of an intraTMP mode of the current block.

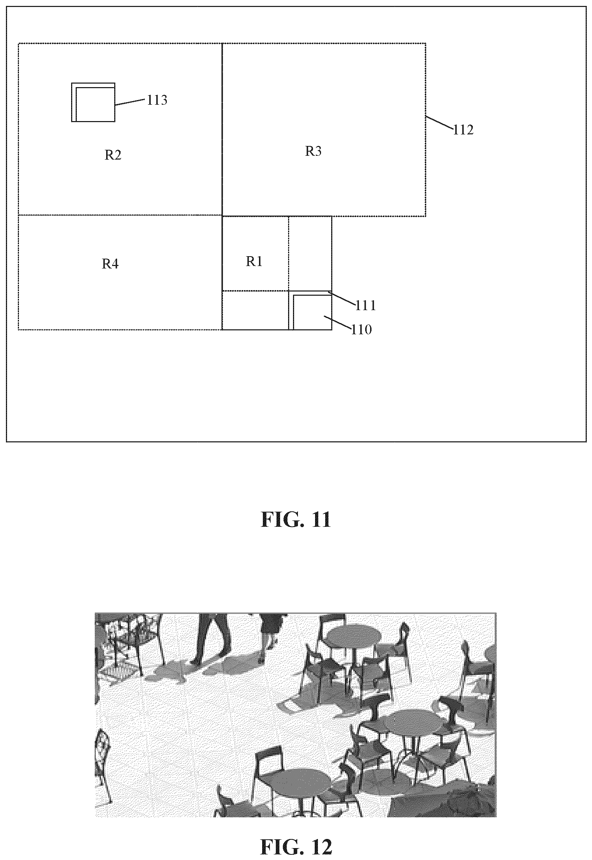

An example of intraTMP is shown in FIG. 11. An inverted L-shaped area 111 at an upper left corner of the current block 110 is used as a template, and the search is performed in a search range 112. The search range is a reconstructed area. The area 112 shown in the figure includes a current CTU R1, a CTU R2 at a upper left side, a CTU R3 at an upper side, and a CTU R4 at a left side. This is an example, and the search range may be different in actual applications. The example shown in FIG. 11 finds a best matching block 113 (matching block) in R2.

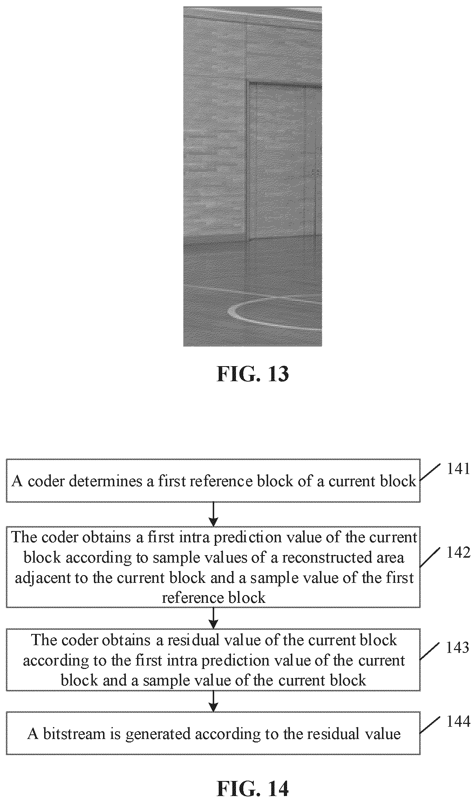

As mentioned above, an important reason why the IBC may significantly improve the compression efficiency of screen content coding is that a lot of repeated blocks may be found in the screen content, and the screen content usually has sharp boundaries. In terms of color (luma and chroma), there may be a situation where pieces of areas have the same color (luma and chroma). There are also approximately repeated blocks in the camera captured content. Even though influences of slight variations of noise and luma, a perspective angle or other reasons are considered, it is undeniable that repeated textures are present in the camera captured content, such as a floor in FIG. 12 and a wallboard in FIG. 13, and approximately repeated textures are present in these contents. At the same time, the floor in FIG. 12 has a slightly darker color in some places, and has a slightly lighter color in some places. Furthermore, in the wallboard in FIG. 13, the repeated textures may have difference in perspective due to a certain angle of the camera.

The IBC and the intraTMP or other technologies may be used in the camera captured content or a natural sequence. However, considering that what is more in the camera captured content are approximately repeated textures, a method of directly using the best matching block or the reference block found based on the IBC and the intraTMP or other technologies as the prediction block of the current block needs to be subject to some optimization, so as to achieve coding which is more suitable for the camera captured content. In the embodiments of the disclosure, the mainly discussed contents are a problem of how to generate the prediction block from the reference block, in case that the reference block is obtained based on the IBC and the intraTMP or other technologies.

An embodiment of the disclosure provides a coding method. FIG. 14 is a schematic flowchart of an implementation of a coding method provided in an embodiment of the disclosure. As shown in FIG. 14, the method includes the following operations 141 to 144.

In operation 141, a coder determines a first reference block of a current block.

In operation 142, the coder obtains a first intra prediction value of the current block according to sample values of a reconstructed area neighbouring the current block and a sample value of the first reference block.

In operation 143, the coder obtains a residual value of the current block according to the first intra prediction value of the current block and a sample value of the current block.

In operation 144, the coder generates a bitstream according to the residual value.

In the embodiment of the disclosure, after obtaining the first reference block of the current block, the coder does not directly use the sample value of the reference block as the first intra prediction value of the current block, instead, the coder further determines the first intra prediction value according to the sample values of the reconstructed area neighbouring the current block and the sample value of the first reference block. That is, when the first intra prediction value is determined, not only the sample value of the first reference block are considered, but also the sample values of the reconstructed area neighbouring the current block are considered, so that the first intra prediction value obtained finally is more accurate. Therefore, on one hand, the coding performance of a picture may be improved, the coding efficiency may be improved, and the bitstream overhead can be saved, or the like, it is especially beneficial to improve the coding and decoding performance of a picture with approximately repeated textures (such as a camera captured picture); on the other hand, a boundary effect of the picture caused by directly using the sample value of the first reference block as the first intra prediction value (i.e., a problem of unnatural transition between blocks of the picture) can be reduced.

Further optional implementations of each of the above operations and relevant nouns, or the like will be described below respectively.

In operation 141, the coder determines a first reference block of a current block.

In the embodiments of the disclosure, methods for determining the first reference block are not limited. In some embodiments, the first reference block may be obtained based on one reference block. For example, the sample value of the first reference block is equal to a sample value of the one reference block, that is, the one reference block is used as the first reference block.

In some other embodiments, the first reference block is obtained based on a weighted sum of multiple reference blocks. Further, in some embodiments, a weighted average value of sample values at corresponding positions of multiple reference blocks is used as a sample value at a corresponding position in the first reference block.

It should be noted that in the embodiments of the disclosure, when the sample value of the first reference block is obtained by weighted averaging, weight coefficient values of multiple reference blocks may be the same or different, and weight coefficient values of different samples in the reference block participating in the weighted averaging may be the same or different. The weight coefficient value of the samples of the reference block may be set according to a relative position of the reference block to the current block and/or a confidence of the reference block. A possible embodiment is that a weight coefficient value of the reference block obtained based on the IBC is greater than a weight coefficient of the reference block obtained based on the intraTMP mode; another possible embodiment is that the weight coefficient value of the reference block obtained based on the IBC is less than the weight coefficient of the reference block obtained based on the intraTMP mode; or, the weight coefficient value of the reference block obtained based on the IBC is equal to the weight coefficient of the reference block obtained based on the intraTMP mode.

In the embodiment of the disclosure, methods for determining the one reference block and methods for determining the multiple reference blocks are not limited.

In some embodiments, the one reference block is a reference block obtained in an IBC mode or an intraTMP mode.

In some embodiments, the multiple reference blocks are reference blocks obtained in an IBC mode and/or an intraTMP mode.

Further, in some embodiments, the reference block obtained based on the IBC mode is located in a picture (frame) where the current block is located.

Specifically, in some embodiments, the reference block obtained in the intraTMP mode may be obtained by the coder as follows. Based on the intraTMP mode, a first matching block of the current block is determined. The one reference block is equal to the first matching block. The multiple reference blocks include one first matching block or K first matching blocks, K is equal to or greater than 1. When the multiple reference blocks include one first matching block, this matching block is a reconstructed block corresponding to a minimum distortion cost. When the multiple reference blocks include K first matching blocks, the K first matching blocks are K reconstructed blocks with the minimum distortion cost, or reconstructed blocks with a distortion cost less than a cost threshold.

Specifically, in some embodiments, the reference block obtained in the IBC mode may be obtained by the coder as follows. Based on the IBC mode, a second matching block matched with an original sample value of the current block is searched from a reconstructed area of the current frame. The one reference block is equal to the second matching block. The multiple reference blocks include one second matching block or L second matching blocks, L is equal to or greater than 1. When the multiple reference blocks include one second matching block, this matching block is a reconstructed block with a minimum error from the sample value of the current block. When multiple reference blocks include L second matching blocks, the L second matching blocks are L reconstructed blocks with the minimum error from the sample value of the current block, or reconstructed blocks with a sample value error less than an error threshold. On the other hand, the coder generates a bitstream according to BVs of the current block and the second matching block, so that the decoder can obtain the BVs by decoding, thereby determining the one or more reference blocks based on the BVs.

In operation 142, a first intra prediction value of the current block is obtained according to sample values of a reconstructed area neighbouring the current block and a sample value of the first reference block.

In the embodiment of the disclosure, the sample values of the reconstructed area neighbouring the current block may also be understood as the neighbouring reconstructed sample values of the current block, in a word, it may refer to the sample values of the reconstructed area around the current block. Specific reference to which reconstructed area is not limited. In some embodiments, the reconstructed area includes an upper neighbouring area of the current block and/or a left neighbouring area of the current block. In the embodiment of the disclosure, the upper neighbouring area may include a row of samples or multiple rows of samples, and the left neighbouring area may include a column of samples or multiple columns of samples.

In the embodiment of the disclosure, specific embodiments of operation 142 are not limited and may be various embodiments, in a word, as long as when the first intra prediction value is determined, the sample values of the reconstructed area neighbouring the current block and the sample value of the first reference block participate in such determination. For example, the first intra prediction value may be determined by methods described in the following first to seventh embodiments.

In the first embodiment, the sample values of the reconstructed area neighbouring the current block and the sample value of the first reference block are filtered to obtain the first intra prediction value of the current block.

Further, in some embodiments, the sample values of the reconstructed area neighbouring the current block and the sample value of the first reference block are filtered by using a filtering template to obtain the first intra prediction value of the current block.

In some embodiments, the filtering template may also be understood as a filter, a coefficient matrix, or a filter matrix, etc. However, in the embodiment of the disclosure, shape and size of the filtering template are not limited, in a word, as long as when the first intra prediction value of at least one sample of the current block is determined, at least one neighbouring reconstructed sample and at least one sample of the first reference block participate in the calculation. In an example, the filtering template is an $M \times M$ filter matrix. M is greater than 1, for example, M=3 or 5, etc. In another example, the filtering template may also be a one-dimensional filter of $M \times 1$ or $1 \times M$. In yet another example, the filtering template may also be a filter with other numbers of taps.

A filter coefficient of the filtering template is not limited. That is, values of elements in the filter matrix are not limited and may be set according to specific performance requirements.

In addition, specific filtering methods are not limited. In some embodiments, an area composed of the first reference block and the reconstructed area may be filtered by using the filtering template to obtain the first intra prediction value of the current block.

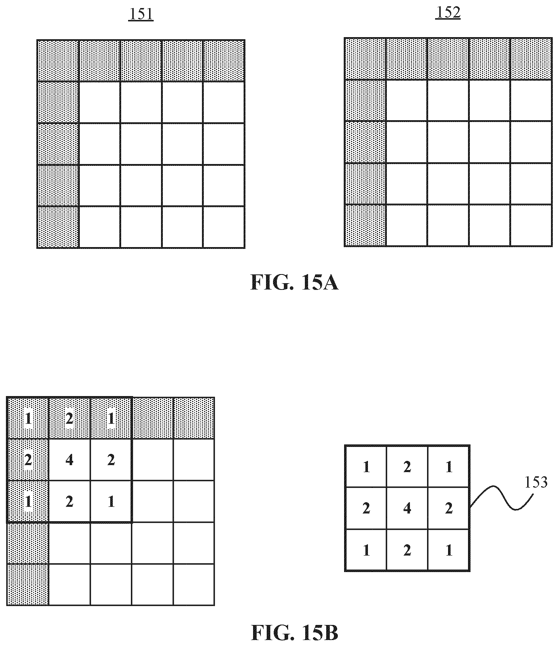

Further, in some embodiments, a position of the first reference block in the composition area relative to the reconstructed area is consistent with a position of the current block relative to the reconstructed area. For example, as shown in FIG. 15A, 151 shows an area composed of the first reference block and the reconstructed area, in which shaded portions are the reconstructed area, and non-shaded portions (i.e., blank portions) are the first reference block; 152 shows the current block and the reconstructed area, in which shaded portions are the reconstructed area, and non-shaded portions (i.e., blank portions) are the current block.

For example, as shown in FIG. 15B, width of the current block (i.e., the blank portions) is set as "width", and height of the current block (i.e., the blank portions) is set as "height". Reconstructed samples (i.e., reconstructed pixels) in an upper row and a left column of the current block may be used for filtering. The upper row and the left column of the current block are a shaded portion shown in FIG. 15B, and the filtering template is 153. A matrix of (width+1)×(height+1) is represented as "temp" (i.e., an example of a first matrix), and sample values of a first row and a first column of temp are reconstructed sample values of the upper row and the left column around the current block. Other positions (same as the position of the current block) are the sample values of the first reference block. The first intra prediction value at the position (x, y) of the current block is represented as pred[x][y], here y ranges from 0 to height-1, and x ranges from 0 to width-1, then pred[x][y] may be obtained according to the following formula:

pred[x][y] = (temp[x][y] + 2 * temp[x + 1][y] + temp[x + 2][y] + 2 * temp[x][y + 1] + 4 * temp[x + 1][y + 1] + 2 *temp[x + 2][y + 1] + temp[x][y + 2] + 2 * temp[x + 1][y + 2] + temp[x + 2][y + 2] + 8) >> 4.

As shown in FIG. 15B, sample values in shaded areas are values of reconstructed samples around the current block, and sample values in non-shaded areas (i.e., blank areas) are the sample values of the first reference block. In this example, a 3×3 filter (i.e., the filtering template 151) is provided, and coefficients of the filter are 1, 2, 1, 2, 4, 2, 1, 2 and 1 from left to right and from top to bottom.

On the other hand, it may also be necessary to control the value of pred[x][y] to be in an allowable numerical range, such as a range from 0 to (1<<bitdepth)-1, here bitdepth is a bit width used by pred[x][y].

In the second embodiment, the first intra prediction value of the current block is obtained according to a weighted sum of the sample values of the first reference block and the sample values of the reconstructed area.

Further, in some embodiments, the second embodiment may be implemented as follows. A first intra prediction value of a fourth sample of the current block is obtained according to a weighted sum of a sample value of a first sample of the first reference block and sample values of a second sample and/or a third sample of the reconstructed area. A position of the first sample corresponds to a position of the fourth sample, the second sample at least includes at least one sample in a same column as the fourth sample in an upper neighbouring area of the current block, and the third sample at least includes at least one sample in a same row as the fourth sample in a left neighbouring area of the current block.

Still further, in some embodiments, a weight coefficient of the second sample and a weight coefficient of the third sample are preset.

Alternatively, the weight coefficient of the second sample is determined according to the position of the fourth sample, a position of the second sample and/or a size of the current block, and the weight coefficient of the third sample is determined according to the position of the fourth sample, a position of the third sample and/or the size of the current block.

For example, the prediction value at the position (x, y) of the current block is set as pred[x][y], here y ranges from 0 to height-1, and x ranges from 0 to width-1. The first intra prediction value of the sample at (x, y) may be determined according to the following formula:

pred[x][y] = ((weightL[x][y] * refL + weightT[x][y] * refT + (64 - weightL[x][y] - weightT[x] [y]) * reflx] [y] + 32) » 6).

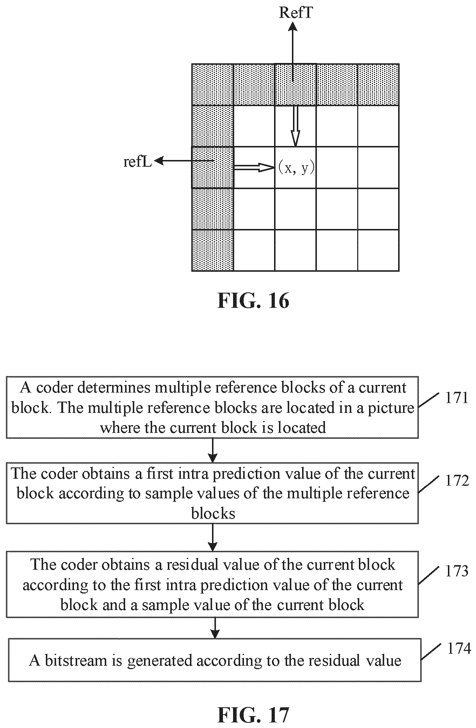

Here ref[x][y] is a sample value of the corresponding position in the reference block determined based on the IBC mode or the intraTMP mode or other modes. As shown in FIG. 16, refL is a value of a reconstructed pixel at (-1, y) on the left side of the current block and in a same row as the point (x, y), and refT is a value of a reconstructed pixel at (x, -1) on the upper side of the current block and in a same column as the point (x, y). weightL[x][y] is a weight of refL, and weightT[x][y] is a weight of refT. Here, in order to avoid decimals, the weight is multiplied by 64 and then right-shifted by 6 bits. weightL[x][y] and weightT[x][y] may be values related to x, y, width and/or height. Methods for deriving weightL[x][y] and weightT[x][y] are not elaborated here. weightL[x][y] and weightT[x][y] may also be fixed values respectively. If so, weightL[x][y] may also be written as weightL, and weightT[x][y] may also be written as weightT.

It may also be necessary to control the value of pred[x][y] to be within an allowable numerical range, such as a range from 0 to (1<<bitdepth)-1, here bitdepth is a bit width used by pred[x][y].

It should be noted that the reference block and the current block are not illustrated separately in FIG. 16, they are only intended to help understanding.

In the third embodiment, intra prediction is performed on the current block according to the sample values of the reconstructed area to obtain a second intra prediction value of the current block. The first intra prediction value of the current block is obtained according to a weighted sum of the sample value of the first reference block and a second intra prediction value of a corresponding sample in the current block.

Further, in some embodiments, the intra prediction is performed on the current block by using at least one of a PLANAR mode, a DC mode, or an angular mode.

For example, in some embodiments, the first intra prediction value at the position (x, y) of the current block is set as pred[x][y]. The value of y ranges from 0 to height-1, and the value of x ranges from 0 to width-1, then pred[x][y] = ((weight [x][y]*ref[x][y]+(64-weight[x][y])*predPlanar[x][y]+32)>>6). Here weight[x][y] is a weight of the reference block at the position (x, y), and 64-weight[x][y] is a weight of a sample prediction value obtained based on the PLANAR mode at the position (x, y). Here, in order to avoid decimals, the weight is multiplied by 64 and then right-shifted by 6 bits. One possibility is that weight[x][y] is the same for all (x, y), then weight[x][y] may also be written as weight. Another possibility is that weight[x][y] varies for different (x, y).

It may also be necessary to control the value of pred[x][y] to be in an allowable numerical range, such as a range from 0 to (1<<bitdepth)-1, here bitdepth is a bit width used by pred[x][y].

In the fourth embodiment, a sample value offset between a neighbouring area of the first reference block and the reconstructed area is determined, and the first intra prediction value of the current block is determined according to the sample value offset and the sample value of the first reference block. A position of the neighbouring area of the first reference block relative to the first reference block is consistent with a position of the reconstructed area relative to the current block. For example, the neighbouring area of the first reference block includes an upper neighbouring area of the first reference block, and accordingly, the reconstructed area includes an upper neighbouring area of the current block; and/or, the neighbouring area of the first reference block includes a left neighbouring area of the first reference block, and accordingly, the reconstructed area includes a left neighbouring area of the current block.

Further, in some embodiments, a first average value of the sample values of the reconstructed area is determined, a second average value of sample values of the neighbouring area of the first reference block is determined, and the sample value offset is determined according to a difference between the first average value and the second average value.

In the fifth embodiment, a sample value offset between a partial area of the first reference block and the reconstructed area is determined, and the first intra prediction value of the current block is determined according to the sample value offset and the sample value of the first reference block.

Further, in some embodiments, a first average value of the sample values of the reconstructed area is determined, a third average value of sample values of the partial area of the first reference block is determined, and the sample value offset is determined according to a difference between the first average value and the third average value.

An example is to calculate an average value avgRec by using the reconstructed samples in the left column and the upper row of the current block, calculate an average value avgRef by using samples in a left column and an upper row out of the reference block or samples in a leftmost column and an uppermost row within the reference block, and use a difference between the two average values as a sample value offset "offset", offset = avgRec - avgRef. The first intra prediction value at the position (x, y) of the current block is set as pred[x][y], here y ranges from 0 to height-1, and x ranges from 0 to width-1, then pred[x][y] = ref[x][y] + offset. That is, the first intra prediction value of each position of the current block is equal to a reference value of the corresponding position plus the sample value offset. Here ref[x][y] is a sample value of the corresponding position in the reference block determined based on the IBC mode or the intraTMP mode or other modes.

In the sixth embodiment, a numerical relationship between the sample values of the reconstructed area and sample values of a partial area of the first reference block is determined, and the first intra prediction value of the current block is obtained according to the numerical relationship and the sample value of the first reference block.

In the fifth embodiment and the sixth embodiment, the reconstructed area includes an upper neighbouring area of the current block, and accordingly, the partial area of the first reference block includes an upper area within the first reference block; and/or, the reconstructed area includes a left neighbouring area of the current block, and accordingly, the partial area of the first reference block includes a left area within the first reference block.

In the seventh embodiment, a numerical relationship between the sample values of the reconstructed area and sample values of a neighbouring area of the first reference block is determined, and the first intra prediction value of the current block is obtained according to the numerical relationship and the sample value of the first reference block. A position of the neighbouring area of the first reference block relative to the first reference block is consistent with a position of the reconstructed area relative to the current block. For example, the neighbouring area of the first reference block includes an upper neighbouring area of the first reference block, and accordingly, the reconstructed area includes an upper neighbouring area of the current block; and/or, the neighbouring area of the first reference block includes a left neighbouring area of the first reference block, and accordingly, the reconstructed area includes a left neighbouring area of the current block.

In the embodiment of the disclosure, the numerical relationship may be understood as a linear relationship or a nonlinear relationship, that is, linear model parameters or nonlinear model parameters of the sample values of the reconstructed area and the sample values of the partial area of the first reference block are determined according to the sample values of the reconstructed area and the sample values of the partial area of the first reference block. The linear model parameters may be understood as a linear relationship, which is an example of the numerical relationship; the nonlinear model parameters may be understood as a nonlinear relationship, which is another example of the numerical relationship.

An example is to calculate a linear model by using the reconstructed sample values in the left column and the upper row of the current block, and using sample values in a left column and an upper row out of the reference block or sample values in a leftmost column and an uppermost row within the reference block, here a is a magnification of the linear model, b is an offset of the linear model. The first intra prediction value at the position (x, y) of the current block is set as pred[x][y], here y ranges from 0 to height-1, and x ranges from 0 to width-1, then pred[x][y] = ref[x][y]*a+b. That is, the first intra prediction value of each position of the current block is equal to a value after the linear model acts on a corresponding reference value.

It may also be necessary to control the value of pred[x][y] to be in an allowable numerical range, such as a range from 0 to (1<<bitdepth)-1, here bitdepth is a bit width used by pred[x][y].

In some embodiments, the first intra prediction value is within a set numerical range.

An embodiment of the disclosure further provides a coding method. FIG. 17 is a schematic flowchart of an implementation of a coding method provided in an embodiment of the disclosure. As shown in FIG. 17, the method includes the following operations 171 to 174.

In operation 171, a coder determines multiple reference blocks of a current block, here the multiple reference blocks are located in a picture where the current block is located.

In operation 172, the coder obtains a first intra prediction value of the current block according to sample values of the multiple reference blocks.

In operation 173, the coder obtains a residual value of the current block according to the first intra prediction value of the current block and a sample value of the current block.

In operation 174, the coder generates a bitstream according to the residual value.

In the embodiment of the disclosure, accuracy of the first intra prediction value is improved through multi-prediction, that is, the first intra prediction value of the current block is determined according to the sample values of multiple reference blocks, rather than directly using one reference block as the first intra prediction value. In this way, the coding performance of a picture may be improved, for example, the coding efficiency may be improved and the bitstream overhead may be saved, or the like, it is especially beneficial to improve coding and decoding performance of a picture with approximately repeated textures (such as a camera captured picture).

Further optional implementations of each of the above operations and relevant nouns, or the like will be described below respectively.

In operation 171, the coder determines multiple reference blocks of a current block, here the multiple reference blocks are located in a picture where the current block is located.

In some embodiments, the multiple reference blocks are reference blocks obtained in an IBC mode and/or an intraTMP mode. This may be understood by referring to the above explanations and descriptions of the method for determining the multiple reference blocks, which would not be elaborated here to save space.

Further, in some embodiments, the reference block obtained based on the IBC mode is located in a picture (frame) where the current block is located.

In operation 172, the coder obtains a first intra prediction value of the current block according to the sample values of the multiple reference blocks.

In the embodiment of the disclosure, how to obtain the first intra prediction value of the current block based on the sample values of the multiple reference blocks is not limited, and there may be various methods for doing such. In a word, the sample values of multiple reference blocks are considered when the first intra prediction value is determined. In some embodiments, the first intra prediction value of the current block is obtained according to a weighted sum of the sample values of the multiple reference blocks.

For example, the reference block obtained based on the intraTMP mode is taken as an example, when a template matching block is searched based on the intraTMP mode, in a limited search range: a matching block with a minimum cost is determined as a reference block ref0, and its cost on the template is cost0; a matching block with a second minimum cost is determined as a reference block ref1, and its cost on the template is cost1. The first intra prediction value at the position (x, y) of the current block is set as pred[x][y], then

$$\mathrm{pred}[x][y]=(\mathrm{weight}*\mathrm{ref0}[x][y]+(64-\mathrm{weight})*\mathrm{ref1}[x][y]+32)>>6).$$

A method for determining weight is weight = cost0*64/(cost0+cost1). Considering that the cost of performing division by the hardware is very great, the method for deriving the weight may be replaced by a disguised division, such as table lookup or the like, which is not elaborated here.

It may also be necessary to control the value of pred[x][y] to be in an allowable numerical range, such as a range from 0 to (1<<bitdepth)-1, here the bitdepth is a bit width used by pred[x][y].

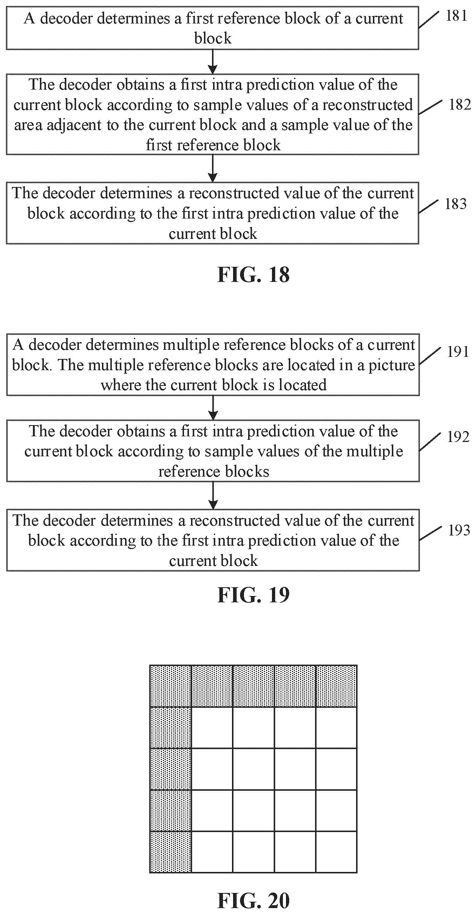

An embodiment of the disclosure provides a decoding method. FIG. 18 is a schematic flowchart of an implementation of a decoding method provided in an embodiment of the disclosure. As shown in FIG. 18, the method includes the following operations 181 to 183.

In operation 181, a decoder determines a first reference block of a current block.

In operation 182, the decoder obtains a first intra prediction value of the current block according to sample values of a reconstructed are a neighbouring the current block and a sample value of the first reference block.

EP 4 604 533 A1

In operation 183, the decoder determines a reconstructed value of the current block according to the first intra prediction value of the current block.

Further optional implementations of each of the above operations and relevant nouns, or the like will be described below respectively.

In operation 181, the decoder determines a first reference block of a current block.

In some embodiments, the first reference block is obtained based on one reference block, or, the first reference block is obtained based on a weighted sum of multiple reference blocks.

Further, in some embodiments, the one reference block is a reference block obtained in an IBC mode or an intraTMP mode.

Further, in some embodiments, the multiple reference blocks are reference blocks obtained in the IBC mode and/or the intraTMP mode.

Still further, in some embodiments, the reference block obtained based on the IBC mode is located in a picture (frame) where the current block is located.

Specifically, in some embodiments, the reference block obtained in the IBC mode may be obtained by the decoder as follows. A bitstream is decoded, and it is determined that the intra prediction modes used by the current block include the IBC mode. The BV of the current block is obtained. A part or all of reference blocks in the one reference block or the multiple reference blocks are determined according to the BV

It should be noted that the technical details not disclosed in operation 181 and its corresponding embodiments may be understood by referring to the explanations and descriptions of operation 141 and its corresponding embodiments in the above coding method. Therefore, in order to save space and avoid repeated descriptions, some technical details of operation 181 are not explained and described any more here.

In operation 182, the decoder obtains a first intra prediction value of the current block according to sample values of a reconstructed area neighbouring the current block and a sample value of the first reference block.

Similarly, implementation methods and specific implementation details of operation 182 may be understood by referring to the explanations and descriptions of operation 142 in the above coding method. In other words, methods for determining the first intra prediction value at the decoding side and the coding side are the same. Therefore, in order to save space and avoid repeated descriptions, some technical details of operation 182 are not explained and described any more here.

In operation 183, the decoder determines a reconstructed value of the current block according to the first intra prediction value of the current block.

In some embodiments, the decoder may decode the bitstream to obtain a residual value of the current block, and determine the reconstructed value of the current block according to the residual value of the current block and the first intra prediction value.

Further, in some embodiments, a reconstructed value of a sample of the current block may be obtained according to a sum of a residual value of the sample and a first intra prediction value of the sample. For example, the reconstructed value of the sample of the current block is equal to the sum of the residual value of the sample and the first intra prediction value of the sample.

An embodiment of the disclosure further provides a decoding method. FIG. 19 is a schematic flowchart of an implementation of a decoding method provided in an embodiment of the disclosure. As shown in FIG. 19, the method includes the following operations 191 to 193.

In operation 191, a decoder determines multiple reference blocks of a current block. The multiple reference blocks are located in a picture where the current block is located.

In some embodiments, the multiple reference blocks are reference blocks obtained in an IBC mode and/or an intraTMP mode.

Further, in some embodiments, the reference block obtained based on the IBC mode is located in a picture (frame) where the current block is located.

It should be noted that technical details not disclosed in operation 191 and its corresponding embodiments may be understood by referring to the explanations and descriptions of operation 171 or operation 141 and the corresponding embodiments in the above coding method. Therefore, in order to save space and avoid repeated descriptions, some technical details of operation 191 are not explained and described any more here.

In operation 192, the decoder obtains a first intra prediction value of the current block according to sample values of the multiple reference blocks.

Similarly, implementation methods and specific implementation details of operation 192 may be understood by referring to explanations and descriptions of operation 171 in the above coding method. In other words, methods for determining the first intra prediction value at the decoding side and the coding side are the same. Therefore, in order to save space and avoid repeated descriptions, some technical details of operation 192 are not explained and described any more here.

In operation 193, the decoder determines a reconstructed value of the current block according to the first intra prediction value of the current block.

Implementation methods and specific implementation details of operation 193 may be understood by referring to the above explanations of operation 183, and thus are not elaborated here.

In the embodiment of the disclosure, the multiple control methods of the above coding/decoding method are also provided, that is, the control methods are applicable to both control of the decoding method and control of the coding method.

A first control method is to use the coding/decoding method described in the embodiment of the disclosure by default.

A second method is to determine, according to a numerical value of a first flag bit, whether the first intra prediction value of the current block is determined by using the coding/decoding method.

In the second method, a further implementation is for example, when a numerical value of a first flag bit is equal to a first numerical value, whether the first intra prediction value of the current block is determined by using the coding/decoding method is determined according to a relationship between a template matching cost of the current block and a reference block obtained in an intraTMP mode and a first threshold.

Still further, in some embodiments, when the template matching cost is less than the first threshold, the first intra prediction value of the current block is equal to the sample value of the first reference block.

Still further, in some embodiments, when the template matching cost is equal to or greater than the first threshold, the first intra prediction value of the current block is determined by using the coding/decoding method.

A third method is to determine, according to a relationship between a template matching cost of the current block and a reference block obtained in the intraTMP mode and a first threshold, whether the first intra prediction value of the current block is determined by using the coding/decoding method.

In the second method, a further implementation is for example, when the template matching cost is less than the first threshold, the first intra prediction value of the current block is equal to the sample value of the first reference block.

In the second method, a further implementation is for example, when the template matching cost is equal to or greater than the first threshold, the first intra prediction value of the current block is determined by using the coding/decoding method.

In the embodiment of the disclosure, the magnitudes of the first numerical value and the first threshold are not limited, and a number of bits representing the first flag bit is not limited, for example, it may be 1 bit, and accordingly, the first numerical value may be 1 or 0.

An exemplary application of the embodiment of the disclosure in an actual application scenario will be described below.

A decoding process of the IBC may be generally summarized as follows. A bitstream is parsed, and whether the IBC is used by the current block is determined. If the IBC is used by the current block, the BV of the current block is determined. A reference block is determined according to the BV. The reference block is used as a prediction block of the current block.

Another statement of using the reference block as the prediction block is to set a value of each position of the prediction block as a value of a corresponding position of the reference block, or to set a prediction value as the value of the corresponding position of the reference block.

A decoding process of the IntraTMP may be generally summarized as follows. A bitstream is parsed, and whether the IntraTMP is used by the current block is determined. If the IntraTMP is used by the current block, the decoder determines a reference block by using template matching search. The reference block is used as a prediction block of the current block.

Another statement of using the reference block as the prediction block is to set a value of each position of the prediction block as a value of a corresponding position of the reference block, or to set a prediction value as the value of the corresponding position of the reference block.

It may be seen that a difference between the two decoding processes is how to determine the reference block. The IBC determines the BV by (parsing the bitstream) and determines the reference block according to the BV. As a special type of the IBC, the intraTMP determines the reference block through the template matching search. As to whether the BV is used when the intraTMP determines the reference block, the BV may be used or may not be used during implementation, which is not limited here.

In the embodiment of the disclosure, the problem to be discussed is how to generate a prediction block from a reference block. The solution may be used in a camera captured content or a natural sequence. The solution may be applied to the IBC, the intraTMP and other IBC technologies.

In the embodiment of the disclosure, the first intra prediction value is generated after a processing process according to the reference block. That is, a step is added after the reference block is found. As to a certain position of the current block, a value of a corresponding position of the reference block is referred to as a reference value. The solution generates the first intra prediction value after a processing process according to the reference value, which includes a method 1 and a method 2 described in the following embodiments.

In the method 1, the prediction block is obtained according to the reference block and reconstructed pixels around the current block.

As to the camera captured content, there may be a difference in color (luma and chroma) between the reference block and the current block, and there may be a strong correlation between the reconstructed pixels around the current block and the current block, especially between pixels inside and outside blocks neighbouring left and upper boundaries of the current block. As to the camera captured content, a block with a minimum cost may be found based on the IBC. Similarly, a block with a minimum template cost may be found based on the intraTMP. As shown in FIG. 20, non-shaded areas (i.e., blank areas) are the current block, and shaded areas are an area of the reconstructed pixels around the current block. It may be seen that the area of the reconstructed pixels around the current block has a certain overlap with the template.

More specifically, a first method is to filter, by using a value of the reference block and values of the reconstructed pixels around the current block, to obtain a prediction value. For example, a filter may be provided, and an example is that the filter is a rectangular filter, such as a 3×3 or 5×5 filter. The reference value and the values of the reconstructed pixels around the current block are placed at corresponding positions respectively and filtered with the filter. Specifically, an example is to filter pixels in one or several upper and left rows (columns), and another example is to filter all the pixels of the current block.

In the embodiment of the disclosure, a filter in a horizontal direction and a one-dimensional filter in a vertical direction may also be used for filtering respectively. In the embodiment of the disclosure, a filter with other numbers of taps may also be used. In the embodiment of the disclosure, more reconstructed pixels around the current block may also be used, such as two rows and two columns of reconstructed pixels, or more reconstructed pixels.

More specifically, a second method is to obtain a prediction value by weighting the value of the reference block and the values of the reconstructed pixels around the current block. Specific implementations of the second method may refer to the above explanations and descriptions of specific implementations of the second embodiment, of which repeated descriptions are not made here to save space.

More specifically, a third method is to obtain a new prediction value by weighting the value of the reference block and a prediction value generated by the reconstructed pixels around the current block. An example is to obtain a new prediction value by weighting the value of the reference block and a prediction value of the PLANAR mode. Specific implementations of the second method may refer to the above explanations and descriptions of specific implementations of the third embodiment, of which repeated descriptions are not made here to save space.

The above first to third methods may be used separately or in combination.

More specifically, a fourth method is to calculate an offset or a linear model or a nonlinear model by using the value of the reference block and the reconstructed pixels around the current block, and determine the first intra prediction value by using the reference block and the offset or the linear model or the nonlinear model. Specific implementations of determining the first intra prediction value by using the reference block and the offset may refer to the above descriptions and explanations of the fourth embodiment and the fifth embodiment, of which descriptions are not repeated here to avoid repetition. Specific implementations of determining the first intra prediction value by using the reference block and the linear model or the nonlinear model may refer to the above descriptions and explanations of the sixth embodiment and the seventh embodiment, of which descriptions are not repeated here to avoid repetition.

In the method 2, a method is to determine N reference blocks by using a BV or a template matching method, and determine a prediction block according to the N reference blocks. N is an integer greater than 1, and an example is that N is 2. It is known that it is difficult for the IBC or the intraTMP to find a completely matching block or a completely template matching block in the camera captured content. Therefore a method of weighting multiple reference blocks may be used to improve the average accuracy of prediction.

More specifically, in some embodiments, all of the N reference blocks may be determined by using the BV, which may be considered as changing single prediction into dual prediction or multi-prediction based on a general IBC.

In some other embodiments, all of the N reference blocks may be determined by using the template matching method, which may be considered as changing single prediction into dual prediction or multi-prediction based on the intraTMP.

In some other embodiments, some of the N reference blocks may be determined by using the BV, and some of the N reference blocks may be determined by using the template matching method. For example, if N is 2, one reference block is determined by using the BV, and another one reference block is determined by using template matching. It should be noted that there is an overhead for transmitting the BV in the bitstream, while there is no overhead if the template matching method is used. On the other hand, the coder has more operating space in the method of transmitting the BV in the bitstream, the coder may determine the BV according to a coding strategy and/or rate-distortion cost or other considerations, and the coder may use an original content of the current block when it makes decisions. The template matching method requires the coder and the decoder to perform the same operation. Therefore when the matching block is searched, only the template may be used, and the original content of the current block cannot be used, which has a certain limitation. Therefore, a method of combining the method of transmitting the BV in the bitstream and the template matching method may use respective advantages of the two methods to improve the compression efficiency.

It should be noted that embodiments not disclosed in the method 2 may be understood by referring to the above explanations and descriptions of specific implementations of operation 172, of which descriptions are not repeated here to save space.

The above method 1 and method 2 may be used separately or in combination.

In some embodiments, a control method of the above solution is also provided. One possibility is to use the above prediction solution by default. Another possibility is to indicate whether the above prediction solution may be used by a flag bit "flag", which may be a sequence level (sps flag), a picture level (pps flag), a slice level (slice header flag) or a block level flag, etc. Yet another possible method is to adaptively determine whether the above prediction solution is used. For example, in the intraTMP, when the reference block is searched, a template cost of each searched block may be obtained. Then, whether the above method is used may be determined according to the cost. A threshold may be provided. If the template cost of the reference block is less than (or less than or equal to) the threshold, the above prediction solution is not used in this case, that is, the reference value is directly used as the prediction value. On the contrary, that is, if the template cost of the reference block is greater than (or equal to or greater than) the threshold, the above prediction solution is used, that is, a processing process is performed on the reference value to generate the prediction value. Specifically, a possible situation is that the threshold is 0.

Of course, an adaptive switching method may also be used when control is made by using the above flag bit. For example, there is a flag at the sequence level, to control whether the above prediction solution may be used at the current sequence. If the flag at the sequence level indicates that the above prediction solution may be used, an adaptive method may be used at the block level, to determine whether the method is used.

In the embodiment of the disclosure, the reference block based on the IBC or the intraTMP or other technologies is further processed, to make it more suitable for coding and decoding the camera captured content, thereby improving the compression efficiency. Specifically, the above method 1 simultaneously uses the reference block which is based on the IBC, the intraTMP or other technologies, and the correlation between the reconstructed pixels around the current block and the current block, and may reduce a boundary effect caused by direct copying the reference block. The method 2 uses multi-prediction to improve average accuracy of prediction.

In the embodiment of the disclosure, the most basic point is to generate a prediction value after a processing process according to the reference block, that is, generate a prediction value after a processing process according to the reference value. That is, a step is added after the reference block is found by using the IBC or the intraTMP or other technologies. Further, the method 1 is to generate a prediction block by using the reference block and the reconstructed pixels around the current block. The method 2 is multi-prediction.

It should be noted that "pixel" mentioned in the context may be understood as "sample".

It should be noted that although operations of the method in the disclosure are described in a specific order in the drawings, it does not require or imply that the operations must be performed in the specific order, or that all of the illustrated operations must be performed to achieve a desired result. Additionally or alternatively, some operations may be omitted, multiple operations may be combined into one operation, and/or one operation may be decomposed into multiple operations, etc. Alternatively, operations in different embodiments may be combined into a new technical solution.

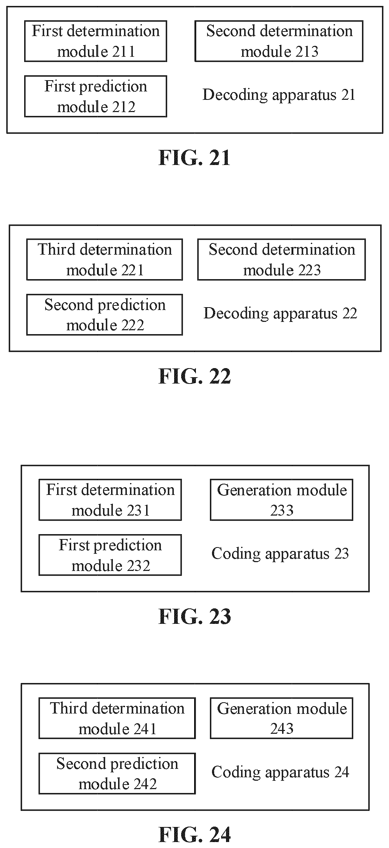

Based on the foregoing embodiments, an embodiment of the disclosure provides a decoding apparatus, which is applied to a decoder. FIG. 21 is a schematic structural diagram of a decoding apparatus provided in an embodiment of the disclosure. As shown in FIG. 21, the decoding apparatus 21 includes a first determination module 211, a first prediction module 212, and a second determination module 213.

The first determination module 211 is configured to determine a first reference block of a current block.

The first prediction module 212 is configured to obtain a first intra prediction value of the current block according to sample values of a reconstructed area neighbouring the current block and a sample value of the first reference block.

The second determination module 213 is configured to determine a reconstructed value of the current block according to the first intra prediction value of the current block.

In some embodiments, the first prediction module 212 is configured to filter the sample values of the reconstructed area neighbouring the current block and the sample value of the first reference block to obtain the first intra prediction value of the current block.

In some embodiments, the first prediction module 212 is configured to filter the sample values of the reconstructed area neighbouring the current block and the sample value of the first reference block by using a filtering template to obtain the first intra prediction value of the current block.

In some embodiments, the first prediction module 212 is configured to obtain the first intra prediction value of the current block according to a weighted sum of the sample value of the first reference block and the sample values of the reconstructed area.

In some embodiments, the first prediction module 212 is configured to obtain a first intra prediction value of a fourth sample of the current block according to a weighted sum of a sample value of a first sample of the first reference block and sample values of a second sample and/or a third sample of the reconstructed area. A position of the first sample corresponds to a position of the fourth sample, the second sample at least includes at least one sample in a same column as the fourth sample in an upper neighbouring area of the current block, and the third sample at least includes at least one sample in a same row as the fourth sample in a left neighbouring area of the current block.

In some embodiments, a weight coefficient of the second sample and a weight coefficient of the third sample are preset. Alternatively, the weight coefficient of the second sample is determined according to the position of the fourth sample, a position of the second sample and/or a size of the current block, and the weight coefficient of the third sample is determined according to the position of the fourth sample, a position of the third sample and/or the size of the current block.

In some embodiments, the first prediction module 212 is configured to: perform intra prediction on the current block according to the sample values of the reconstructed area to obtain a second intra prediction value of the current block; and obtain the first intra prediction value of the current block according to a weighted sum of the sample value of the first reference block and a second intra prediction value of a corresponding sample in the current block.

In some embodiments, the intra prediction is performed on the current block by using at least one of a PLANAR mode, a DC mode, or an angular mode.

In some embodiments, the first prediction module 212 is configured to: determine a sample value offset between a neighbouring area of the first reference block and the reconstructed area, here a position of the neighbouring area of the first reference block relative to the first reference block is consistent with a position of the reconstructed area relative to the current block; and determine the first intra prediction value of the current block according to the sample value offset and the sample value of the first reference block.

In some embodiments, the first prediction module 212 is configured to determine a first average value of the sample values of the reconstructed area; determine a second average value of sample values of the neighbouring area of the first reference block; and determine the sample value offset according to a difference between the first average value and the second average value.

In some embodiments, the first prediction module 212 is configured to: determine a sample value offset between a partial area of the first reference block and the reconstructed area; and determine the first intra prediction value of the current block according to the sample value offset and the sample value of the first reference block.

In some embodiments, the first prediction module 212 is configured to: determine a first average value of the sample values of the reconstructed area; determine a third average value of sample values of the partial area of the first reference block; and determine the sample value offset according to a difference between the first average value and the third average value.

In some embodiments, the first prediction module 212 is configured to: determine a numerical relationship between the sample values of the reconstructed area and sample values of a partial area of the first reference block; and obtain the first intra prediction value of the current block according to the numerical relationship and the sample value of the first reference block.

In some embodiments, the first prediction module 212 is configured to: determine a numerical relationship between the sample values of the reconstructed area and sample values of a neighbouring area of the first reference block, here a position of the neighbouring area of the first reference block relative to the first reference block is consistent with a position of the reconstructed area relative to the current block; and obtain the first intra prediction value of the current block according to the numerical relationship and the sample value of the first reference block.

In some embodiments, the first reference block is obtained based on one reference block, or the first reference block is obtained based on a weighted sum of multiple reference blocks.

In some embodiments, the one reference block is a reference block obtained in an IBC mode or an intraTMP mode.

In some embodiments, the multiple reference blocks are reference blocks obtained in an IBC mode and/or an intraTMP mode.

In some embodiments, the decoding apparatus 21 further includes a first control module, which is configured to determine, according to a numerical value of a first flag bit, whether the first intra prediction value of the current block is determined by using the first prediction module 212.

In some other embodiments, the decoding apparatus 21 further includes a second control module, which is configured to, when the numerical value of the first flag bit is equal to a first numerical value, determine, according to a relationship between a template matching cost of the current block and a reference block obtained in an intraTMP mode and a first threshold, whether the first intra prediction value of the current block is determined by using the first prediction module 212.

In some other embodiments, the decoding apparatus 21 further includes a third control module, which is configured to determine, according to a relationship between a template matching cost of the current block and a reference block obtained in the intraTMP mode and a first threshold, whether the first intra prediction value of the current block is determined by using the first prediction module 212.

In some embodiments, when the template matching cost is less than the first threshold, the first intra prediction value of the current block is equal to the sample value of the first reference block.

In some embodiments, the second control module or the third control module is configured to determine the first intra prediction value of the current block by using the first prediction module 212 when the template matching cost is equal to or greater than the first threshold.

Based on the foregoing embodiments, an embodiment of the disclosure further provides a decoding apparatus, which is applied to a decoder. FIG. 22 is a schematic structural diagram of another decoding apparatus provided in an embodiment of the disclosure. As shown in FIG. 22, the decoding apparatus 22 includes a third determination module 221, a second prediction module 222, and a second determination module 223.

The third determination module 221 is configured to determine multiple reference blocks of a current block. The multiple reference blocks are located in a picture where the current block is located.

The second prediction module 222 is configured to obtain a first intra prediction value of the current block according to sample values of the multiple reference blocks.

The second determination module 223 is configured to determine a reconstructed value of the current block according to the first intra prediction value of the current block.

In some embodiments, the second prediction module 222 is configured to obtain the first intra prediction value of the current block according to a weighted sum of the sample values of the multiple reference blocks.

In some embodiments, the multiple reference blocks are reference blocks obtained in an IBC mode and/or an intraTMP mode.

In some embodiments, the decoding apparatus 22 further includes a first control module, which is configured to determine, according to a numerical value of a first flag bit, whether the first intra prediction value of the current block is determined by using the second prediction module 222.

In some embodiments, the decoding apparatus 22 further includes a second control module, which is configured to, when the numerical value of the first flag bit is equal to a first numerical value, determine, according to a relationship between a template matching cost of the current block and a reference block obtained in an intraTMP mode and a first threshold, whether the first intra prediction value of the current block is determined by using the second prediction module 222.

In some other embodiments, the decoding apparatus 21 further includes a third control module, which is configured to determine, according to a relationship between a template matching cost of the current block and a reference block obtained in the intraTMP mode and a first threshold, whether the first intra prediction value of the current block is determined by using the second prediction module 222.

In some embodiments, the second control module or the third control module is configured to determine the first intra prediction value of the current block by using the second prediction module 222 when the template matching cost is equal to or greater than the first threshold.

The above descriptions of the decoding apparatus embodiments are similar to the above descriptions of the coding/decoding method embodiments, and have advantageous effects similar to the coding/decoding method embodiments. Technical details not disclosed in the apparatus embodiments of the disclosure may be understood by referring to the descriptions of the coding/decoding method embodiments of the disclosure.

An embodiment of the disclosure provides a coding apparatus applied to a coder. FIG. 23 is a schematic structural diagram of a coding apparatus provided in an embodiment of the disclosure. As shown in FIG. 23, the coding apparatus 23 includes a first determination module 231, a first prediction module 232, and a generation module 233.

The first determination module 231 is configured to determine a first reference block of a current block.

The first prediction module 232 is configured to obtain a first intra prediction value of the current block according to sample values of a reconstructed area neighbouring the current block and a sample value of the first reference block.

The generation module 233 is configured to generate a bitstream according to the first intra prediction value of the current block and a sample value of the current block.

In some embodiments, the generation module 233 is configured to: determine a sample residual value of the current block according to the sample value of the current block and the first intra prediction value of the current block; and code the sample residual value of the current block, and write the obtained coded bits into the bitstream.

An embodiment of the disclosure provides a coding apparatus applied to a coder. FIG. 24 is a schematic structural diagram of a coding apparatus provided in an embodiment of the disclosure. As shown in FIG. 24, the coding apparatus 24 includes a third determination module 241, a second prediction module 242, and a generation module 243.

The third determination module 241 is configured to determine multiple reference blocks of a current block. The multiple reference blocks are located in a picture where the current block is located.

The second prediction module 242 is configured to obtain a first intra prediction value of the current block according to sample values of the multiple reference blocks.

The generation module 243 is configured to generate a bitstream according to the first intra prediction value of the current block and a sample value of the current block.

In some embodiments, the second prediction module 242 is configured to obtain the first intra prediction value of the current block according to a weighted sum of the sample values of the multiple reference blocks.

The above descriptions of the coding apparatus embodiments are similar to the above descriptions of the coding/decoding method embodiments and the decoding apparatus embodiments, and have advantageous effects similar to the coding/decoding method embodiments and the decoding apparatus embodiments. Technical details not disclosed in the apparatus embodiments of the disclosure may be understood by referring to the descriptions of the coding/decoding method embodiments and the decoding apparatus embodiments of the disclosure.

It should be noted that division of the modules in the apparatus described in the embodiments of the disclosure is schematic and is only a logic function division. There may be other division manners in actual implementations. Furthermore, various functional units in each embodiment of the disclosure may be integrated into a processing unit or may physically exist independently, or two or more than two units may be integrated into a unit. The above integrated unit may be implemented in form of hardware, or in form of software functional units, or in form of a combination of software and hardware.

It should be noted that in the embodiments of the disclosure, if the above methods are implemented in form of a software functional module and sold or used as an independent product, the above methods may also be stored in a computer-readable storage medium. Based on such an understanding, the technical solutions of the embodiments of the disclosure substantially or parts making contributions to the related art may be embodied in form of a software product, and the computer software product is stored in a storage medium, including several instructions to enable an electronic device to execute all or part of the method described in each of the embodiments of the disclosure. The foregoing storage medium includes various media capable of storing program codes such as a U disk, a mobile hard disk, a Read-Only Memory (ROM), a magnetic disk, or an optical disk, etc. In this way, the embodiments of the disclosure are not limited to any particular combination of hardware and software.

An embodiment of the disclosure provides a computer-readable storage medium, the computer-readable storage medium has stored thereon a computer program, and a method for processing video pictures at the coder side or a method for processing video pictures at the decoder side is implemented when the computer program is executed.

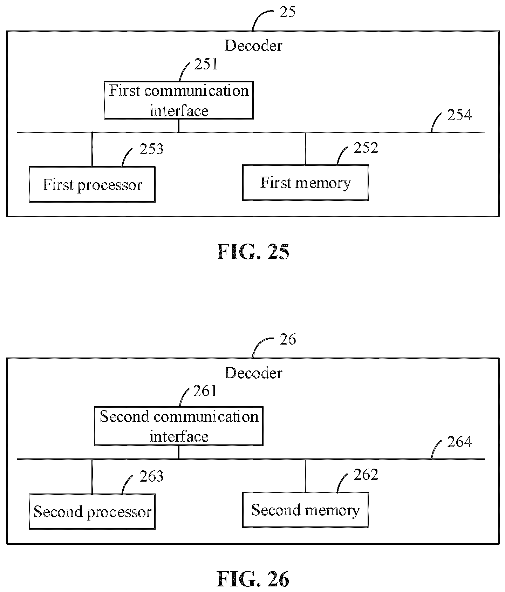

An embodiment of the disclosure provides a decoder. As shown in FIG. 25, the decoder 25 includes a first communication interface 251, a first memory 252, and a first processor 253. Various components are coupled together through a first bus system 254. It may be understood that the first bus system 254 is configured to implement connection and communication between these components. The first bus system 254 includes a power bus, a control bus and a status signal bus in addition to a data bus. However, for the sake of clear explanation, various buses are marked as the first bus system 254 in FIG. 25.

The first communication interface 251 is configured to receive and send signals in a process of receiving information from or sending information to other external network elements.

The first memory 252 is configured to store a computer program executable on the first processor 253.

The first processor 253 is configured to perform the decoding method described in the embodiments of the disclosure executing the computer program.

It may be understood that the first memory 252 in the embodiment of the disclosure may be a volatile memory or a nonvolatile memory, or may include both the volatile memory and the nonvolatile memory. The nonvolatile memory may be a ROM, a Programmable ROM (PROM), an Erasable PROM (EPROM), an Electrically EPROM (EEPROM) or a flash memory. The volatile memory may be a Random Access Memory (RAM), and is used as an external high-speed cache. In exemplary but non-limiting descriptions, many forms of RAMs are available, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DRRAM). The first memory 252 in the system and method described in the disclosure is intended to include, but is not limited to these and any other suitable types of memories.

Furthermore, the first processor 253 may be an integrated circuit chip with a signal processing capability. During implementation, each step in the above method may be completed by an integrated logical circuit in a hardware form in the first processor 253 or an instruction in a software form. The first processor 253 may be a general purpose processor, a Digital Signal Processor (DSP), an Application Specific Integrated Circuit (ASIC), a Field Programmable Gate Array (FPGA) or other programmable logical devices, a discrete gate or a transistor logical device, a discrete hardware component. Various methods, steps and logical block diagrams disclosed in the embodiments of the disclosure may be implemented or executed. The general purpose processor may be a microprocessor, or the processor may also be any conventional processor, etc. The steps of the method disclosed in combination with the embodiments of the disclosure may be directly embodied to be executed and completed by a hardware decoding processor, or executed and completed by a combination of hardware in the decoding processor and software modules. The software module may be located in a mature storage medium in this field such as a RAM, a flash memory, a ROM, a PROM, or an EEPROM, a register, etc. The storage medium is located in the first memory 252, and the first processor 253 reads information in the first memory 252 and completes the steps of the above method in combination with the hardware thereof.

It may be understood that these embodiments described in the disclosure may be implemented in hardware, software, firmware, middleware, microcode or a combination thereof. As to implementation in hardware, the processing unit may be implemented in one or more ASICs, DSPs, DSP Devices (DSPDs), Programmable Logic Devices (PLDs), FPGAs, general purpose processors, controllers, microcontrollers, microprocessors, other electronic units configured to perform functions described in the disclosure, or a combination thereof. As to implementation in software, the technologies described in the disclosure may be implemented by the modules (such as processes, functions, etc.) performing the functions described in the disclosure. The software codes may be stored in a memory and executed by a processor. The memory may be implemented in or out of the processor.

Optionally, as another embodiment, the first processor 253 is further configured to perform any one of the above method embodiments at the decoder 50 side when executing the computer program.

An embodiment of the disclosure provides a coder. As shown in FIG. 26, the decoder 26 includes a second communication interface 261, a second memory 262, and a second processor 263. Various components are coupled together through a second bus system 264. It may be understood that the second bus system 264 is configured to implement connection and communication between these components. The second bus system 264 includes a power bus, a control bus and a status signal bus in addition to a data bus. However, for the sake of clear explanation, various buses are marked as the second bus system 264 in FIG. 26.

The second communication interface 261 is configured to receive and send signals in a process of receiving information from or sending information to other external network elements.

The second memory 262 is configured to store a computer program executable on the second processor 263.

The second processor 263 is configured to perform the coding method described in the embodiments of the disclosure executing the computer program.

It may be understood that hardware functions of the second memory 262 are similar to the hardware functions of the first memory 252, and hardware functions of the second processor 263 are similar to the hardware functions of the first processor 253, which are not described in detail here.

An embodiment of the disclosure provides an electronic device, which includes a processor and a computer-readable storage medium. The processor is configured to execute a computer program. The computer-readable storage medium has stored thereon a computer program. When the computer program is executed by the processor, the coding method and/or the decoding method described in the embodiments of the disclosure are implemented. The electronic device may be various types of devices with video coding and/or decoding capabilities. For example, the electronic device is a mobile phone, a tablet computer, a laptop computer, a personal computer, a television, a projection device, or a monitoring device, etc.

It should be noted here that the above descriptions of the storage medium and device embodiments are similar to the above descriptions of the method embodiments, and have advantageous effects similar to the method embodiments. Technical details not disclosed in the storage medium, storage media and device embodiments of the disclosure may be understood with reference to the descriptions of the method embodiments of the disclosure.

It should be understood that "one embodiment" or "an embodiment" or "some embodiments" mentioned throughout the description may mean that specific features, structures or characteristics related to the embodiment are included in at least one embodiment of the disclosure. Therefore, "in one embodiment" or "in an embodiment" or "in some embodiments" present throughout the description does not necessarily refer to the same embodiment. Furthermore, these specific features, structures or characteristics may be combined in one or more embodiments by any suitable manner. It should be understood that in various embodiments of the disclosure, sizes of serial numbers of the above processes do not mean a sequence of execution, and the sequence of execution of the processes should be determined by the function and internal logic, and should not constitute any limitation on implementation processes of the embodiments of the disclosure. The above serial numbers of the embodiments of the disclosure are only for the purpose of descriptions, and do not represent advantages and disadvantages of the embodiments. The above descriptions of various embodiments tend to emphasize differences between various embodiments, and the same or similar portions between various embodiments may refer to each other, which is not elaborated here for the sake of brevity.

In the disclosure, a term "and/or" is only an association relationship describing associated objects and represents that there may be three relationships. For example, object A and/or object B may represent three situations, i.e., independent existence of object A, simultaneous existence of object A and object B, and independent existence of object B.

It should be noted that in the disclosure, terms "including", "include" or any other variants thereof are intended to encompass a non-exclusive inclusion, so that a process, method, article or apparatus including a series of elements includes not only those elements, but also other elements which are not explicitly listed, or elements inherent to such process, method, article or apparatus. Without further limitation, an element defined by a statement "including a..." does not preclude presence of additional identical elements in a process, method, article or apparatus including the element.

In several embodiments provided in the disclosure, it should be understood that the disclosed devices and methods may be implemented in other manners. The above embodiments are only schematic. For example, division of the modules is only a logic function division, and there may be other division manners in actual implementations. For example, multiple units or components may be combined or integrated into another system, or some features may be neglected or may not be executed. Furthermore, coupling or direct coupling or communication connection between various displayed or discussed components may be indirect coupling or communication connection implemented through some interfaces, devices or the modules, and may be in electrical, mechanical or other forms.

The above modules described as separate parts may be or may not be physically separated, and parts displayed as modules may be or may not be physical modules, that is, may be located in a place, or may be distributed to multiple network units. Part or all of the modules may be selected to achieve the purpose of the solutions in the embodiments according to actual requirements.

Furthermore, various functional modules in the embodiments of the disclosure may be all integrated into a processing unit, or each module may be separately used as a unit, or two or more than two modules may be integrated into a unit. The above integrated module may be implemented in form of hardware or in form of hardware plus software functional units.

It may be understood by those of ordinary skill in the art that all or part of steps implementing the above method embodiments may be completed by hardware relevant to program instructions, and the foregoing program may be stored in a computer-readable storage medium, and steps including the above method embodiments are executed when the program is executed. The foregoing storage medium includes various media capable of storing program codes such as a mobile storage device, a ROM, a magnetic disk, or an optical disk, etc.

Alternatively, if the above integrated unit of the disclosure is implemented in form of a software functional module and sold or used as an independent product, the above integrated unit may also be stored in a computer-readable storage medium. Based on such an understanding, the technical solutions of the embodiments of the disclosure substantially or parts making contributions to the related art may be embodied in form of a software product, and the computer software product is stored in a storage medium, including several instructions to enable an electronic device to execute all or part of the method described in each of the embodiments of the disclosure. The foregoing storage medium includes various media capable of storing program codes such as a mobile storage device, a ROM, a magnetic disk, or an optical disk, etc.

The methods disclosed in several method embodiments provided in the disclosure may be arbitrarily combined without conflict to obtain new method embodiments.

The features disclosed in several product embodiments provided in the disclosure may be arbitrarily combined without conflict to obtain new product embodiments.

The features disclosed in several method or device embodiments provided in the disclosure may be arbitrarily combined without conflict to obtain new method or device embodiments.

The above descriptions are only implementations of the disclosure. However, the scope of protection of the disclosure is not limited thereto. Variation or replacement easily conceived by any technician familiar with this technical field within the technical scope disclosed in the disclosure should fall within the scope of protection of the disclosure. Therefore, the scope of protection of the disclosure should be subject to the scope of protection of the claims.

**Claims**

1. A decoding method, applied to a decoder, the method comprising:

   determining a first reference block of a current block;
   obtaining a first intra prediction value of the current block according to sample values of a reconstructed area neighbouring the current block and a sample value of the first reference block; and
   determining a reconstructed value of the current block according to the first intra prediction value of the current block.

2. The method of claim 1, wherein the sample values of the reconstructed area neighbouring the current block and the sample value of the first reference block are filtered to obtain the first intra prediction value of the current block.

3. The method of claim 2, wherein the sample values of the reconstructed area neighbouring the current block and the sample value of the first reference block are filtered by using a filtering template to obtain the first intra prediction value of the current block.

4. The method of claim 1, wherein the first intra prediction value of the current block is obtained according to a weighted sum of the sample value of the first reference block and the sample values of the reconstructed area.

5. The method of claim 4, wherein a first intra prediction value of a fourth sample of the current block is obtained according to a weighted sum of a sample value of a first sample of the first reference block and sample values of a second sample and/or a third sample of the reconstructed area,

wherein a position of the first sample corresponds to a position of the fourth sample, the second sample at least comprises at least one sample in a same column as the fourth sample in an upper neighbouring area of the current block, and the third sample at least comprises at least one sample in a same row as the fourth sample in a left neighbouring area of the current block.

6. The method of claim 5, wherein a weight coefficient of the second sample and a weight coefficient of the third sample are preset, or
the weight coefficient of the second sample is determined according to at least one of the position of the fourth sample, a position of the second sample or a size of the current block, and the weight coefficient of the third sample is determined according to at least one of the position of the fourth sample, a position of the third sample or the size of the current block.

7. The method of claim 1, wherein intra prediction is performed on the current block according to the sample values of the reconstructed area to obtain a second intra prediction value of the current block, and
the first intra prediction value of the current block is obtained according to a weighted sum of the sample value of the first reference block and a second intra prediction value of a corresponding sample in the current block.

8. The method of claim 7, wherein the intra prediction is performed on the current block by using at least one of a PLANAR mode, a Direct Current (DC) mode, or an angular mode.

9. The method of claim 1, wherein a sample value offset between a neighbouring area of the first reference block and the reconstructed area is determined, and wherein a position of the neighbouring area of the first reference block relative to the first reference block is consistent with a position of the reconstructed area relative to the current block, and the first intra prediction value of the current block is determined according to the sample value offset and the sample value of the first reference block.

10. The method of claim 9, wherein a first average value of the sample values of the reconstructed area is determined,

   a second average value of sample values of the neighbouring area of the first reference block is determined, and the sample value offset is determined according to a difference between the first average value and the second average value.

11. The method of claim 1, wherein a sample value offset between a partial area of the first reference block and the reconstructed area is determined, and
the first intra prediction value of the current block is determined according to the sample value offset and the sample value of the first reference block.

12. The method of claim 11, wherein a first average value of the sample values of the reconstructed area is determined,

   a third average value of sample values of the partial area of the first reference block is determined, and the sample value offset is determined according to a difference between the first average value and the third average value.

13. The method of claim 1, wherein a numerical relationship between the sample values of the reconstructed area and sample values of a partial area of the first reference block is determined, and
the first intra prediction value of the current block is obtained according to the numerical relationship and the sample value of the first reference block.

14. The method of any one of claims 11 to 13, wherein the reconstructed area comprises an upper neighbouring area of the current block, and accordingly, the partial area of the first reference block comprises an upper area within the first reference block; and/or, the reconstructed area comprises a left neighbouring area of the current block, and accordingly, the partial area of the first reference block comprises a left area within the first reference block.

15. The method of claim 1, wherein a numerical relationship between the sample values of the reconstructed area and sample values of a neighbouring area of the first reference block is determined, and wherein a position of the neighbouring area of the first reference block relative to the first reference block is consistent with a position of the reconstructed area relative to the current block, and
the first intra prediction value of the current block is obtained according to the numerical relationship and the sample value of the first reference block.

16. The method of any one of claims 1 to 10 and 15, wherein the reconstructed area comprises an upper neighbouring area of the current block and/or a left neighbouring area of the current block.

17. The method of any one of claims 1 to 16, wherein the first reference block is obtained based on one reference block, or the first reference block is obtained based on a weighted sum of a plurality of reference blocks.

18. The method of claim 17, wherein the one reference block is a reference block obtained in an Intra Block Copy (IBC) mode or an intra Template Matching Prediction (intraTMP) mode.

19. The method of claim 17, wherein the plurality of reference blocks are reference blocks obtained in an Intra Block Copy (IBC) mode and/or an intra Template Matching Prediction (intraTMP) mode.

20. The method of claim 18 or 19, wherein the reference block obtained based on the IBC mode is located in a picture where the current block is located.

21. The method of any one of claims 1 to 20, wherein whether the first intra prediction value of the current block is determined by using the decoding method is determined according to a numerical value of a first flag bit.

22. The method of any one of claims 1 to 20, wherein when the numerical value of the first flag bit is equal to a first numerical value, whether the first intra prediction value of the current block is determined by using the decoding method is determined according to a relationship between a template matching cost of the current block and a reference block obtained in an intra Template Matching Prediction (intraTMP) mode and a first threshold.

23. The method of any one of claims 1 to 20, wherein whether the first intra prediction value of the current block is determined by using the decoding method is determined according to a relationship between a template matching cost of the current block and a reference block obtained in an intra Template Matching Prediction (intraTMP) mode and a first threshold.

24. The method of claim 22 or 23, wherein when the template matching cost is less than the first threshold, the first intra prediction value of the current block is equal to the sample value of the first reference block.

25. The method of claim 22 or 23, wherein when the template matching cost is equal to or greater than the first threshold, the first intra prediction value of the current block is determined by using the decoding method.

26. A decoding method, applied to a decoder, the method comprising:

determining a plurality of reference blocks of a current block, wherein the plurality of reference blocks are located in a picture where the current block is located;
obtaining a first intra prediction value of the current block according to sample values of the plurality of reference blocks; and
determining a reconstructed value of the current block according to the first intra prediction value of the current block.

27. The method of claim 26, wherein the first intra prediction value of the current block is obtained according to a weighted sum of the sample values of the plurality of reference blocks.

28. The method of claim 26 or 27, wherein the plurality of reference blocks are reference blocks obtained in an Intra Block Copy (IBC) mode and/or an intra Template Matching Prediction (intraTMP) mode.

29. The method of claim 28, wherein the reference block obtained based on the IBC mode is located in the picture where the current block is located.

30. The method of any one of claims 26 to 28, wherein whether the first intra prediction value of the current block is determined by using the decoding method is determined according to a numerical value of a first flag bit.

31. The method of any one of claims 26 to 28, wherein when a numerical value of a first flag bit is equal to a first numerical value, whether the first intra prediction value of the current block is determined by using the decoding method is determined according to a relationship between a template matching cost of the current block and a reference block obtained in an intra Template Matching Prediction (intraTMP) mode and a first threshold.

32. The method of any one of claims 26 to 28, wherein whether the first intra prediction value of the current block is determined by using the decoding method is determined according to a relationship between a template matching cost of the current block and a reference block obtained in an intra Template Matching Prediction (intraTMP) mode and a first threshold.

33. The method of claim 31 or 32, wherein when the template matching cost is equal to or greater than the first threshold, the first intra prediction value of the current block is determined by using the decoding method.

34. A coding method, applied to a coder, the method comprising:

   determining a first reference block of a current block;
   obtaining a first intra prediction value of the current block according to sample values of a reconstructed area neighbouring the current block and a sample value of the first reference block;
   obtaining a residual value of the current block according to the first intra prediction value of the current block and a sample value of the current block; and
   generating a bitstream according to the residual value.

35. The method of claim 34, wherein the sample values of the reconstructed area neighbouring the current block and the sample value of the first reference block are filtered to obtain the first intra prediction value of the current block.

36. The method of claim 35, wherein the sample values of the reconstructed area neighbouring the current block and the sample value of the first reference block are filtered by using a filtering template to obtain the first intra prediction value of the current block.

37. The method of claim 34, wherein the first intra prediction value of the current block is obtained according to a weighted sum of the sample value of the first reference block and the sample values of the reconstructed area.

38. The method of claim 37, wherein a first intra prediction value of a fourth sample of the current block is obtained according to a weighted sum of a sample value of a first sample of the first reference block and sample values of a second sample and/or a third sample of the reconstructed area,
   wherein a position of the first sample corresponds to a position of the fourth sample, the second sample at least comprises at least one sample in a same column as the fourth sample in an upper neighbouring area of the current block, and the third sample at least comprises at least one sample in a same row as the fourth sample in a left neighbouring area of the current block.

39. The method of claim 38, wherein a weight coefficient of the second sample and a weight coefficient of the third sample are preset, or
   the weight coefficient of the second sample is determined according to at least one of the position of the fourth sample, a position of the second sample or a size of the current block, and the weight coefficient of the third sample is determined according to at least one of the position of the fourth sample, a position of the third sample or the size of the current block.

40. The method of claim 34, wherein intra prediction is performed on the current block according to the sample values of the reconstructed area to obtain a second intra prediction value of the current block, and
   the first intra prediction value of the current block is obtained according to a weighted sum of the sample value of the first reference block and a second intra prediction value of a corresponding sample in the current block.

41. The method of claim 40, wherein the intra prediction is performed on the current block by using at least one of a PLANAR mode, a Direct Current (DC) mode, or an angular mode.

42. The method of claim 34, wherein a sample value offset between a neighbouring area of the first reference block and the reconstructed area is determined, and wherein a position of the neighbouring area of the first reference block relative to the first reference block is consistent with a position of the reconstructed area relative to the current block, and

the first intra prediction value of the current block is determined according to the sample value offset and the sample value of the first reference block.

43. The method of claim 42, wherein a first average value of the sample values of the reconstructed area is determined,

a second average value of sample values of the neighbouring area of the first reference block is determined, and the sample value offset is determined according to a difference between the first average value and the second average value.

44. The method of claim 34, wherein a sample value offset between a partial area of the first reference block and the reconstructed area is determined, and the first intra prediction value of the current block is determined according to the sample value offset and the sample value of the first reference block.

45. The method of claim 44, wherein a first average value of the sample values of the reconstructed area is determined,

a third average value of sample values of the partial area of the first reference block is determined, and the sample value offset is determined according to a difference between the first average value and the third average value.

46. The method of claim 34, wherein a numerical relationship between the sample values of the reconstructed area and sample values of a partial area of the first reference block is determined, and the first intra prediction value of the current block is obtained according to the numerical relationship and the sample value of the first reference block.

47. The method of any one of claims 44 to 46, wherein the reconstructed area comprises an upper neighbouring area of the current block, and accordingly, the partial area of the first reference block comprises an upper area within the first reference block; and/or, the reconstructed area comprises a left neighbouring area of the current block, and accordingly, the partial area of the first reference block comprises a left area within the first reference block.

48. The method of claim 34, wherein a numerical relationship between the sample values of the reconstructed area and sample values of a neighbouring area of the first reference block is determined, and wherein a position of the neighbouring area of the first reference block relative to the first reference block is consistent with a position of the reconstructed area relative to the current block, and the first intra prediction value of the current block is obtained according to the numerical relationship and the sample value of the first reference block.

49. The method of any one of claims 34 to 43 and 48, wherein the reconstructed area comprises an upper neighbouring area of the current block and/or a left neighbouring area of the current block.

50. The method of any one of claims 34 to 49, wherein the first reference block is obtained based on one reference block, or the first reference block is obtained based on a weighted sum of a plurality of reference blocks.

51. The method of claim 50, wherein the one reference block is a reference block obtained in an Intra Block Copy (IBC) mode or an intra Template Matching Prediction (intraTMP) mode.

52. The method of claim 50, wherein the plurality of reference blocks are reference blocks obtained in an Intra Block Copy (IBC) mode and/or an intra Template Matching Prediction (intraTMP) mode.

53. The method of claim 51 or 52, wherein the reference block obtained based on the IBC mode is located in a picture where the current block is located.

54. The method of any one of claims 34 to 52, wherein whether the first intra prediction value of the current block is determined by using the coding method is determined according to a numerical value of a first flag bit.

55. The method of any one of claims 34 to 52, wherein when a numerical value of a first flag bit is equal to a first numerical value, whether the first intra prediction value of the current block is determined by using the coding method is determined according to a relationship between a template matching cost of the current block and a reference block obtained in an intra Template Matching Prediction (intraTMP) mode and a first threshold.

56. The method of any one of claims 34 to 52, wherein whether the first intra prediction value of the current block is determined by using the coding method is determined according to a relationship between a template matching cost of the current block and a reference block obtained in an intra Template Matching Prediction (intraTMP) mode and a first threshold.

57. The method of claim 55 or 56, wherein when the template matching cost is less than the first threshold, the first intra prediction value of the current block is equal to the sample value of the first reference block.

58. The method of claim 55 or 56, wherein when the template matching cost is equal to or greater than the first threshold, the first intra prediction value of the current block is determined by using the coding method.

59. A coding method, applied to a coder, the method comprising:

determining a plurality of reference blocks of a current block, wherein the plurality of reference blocks are located in a picture where the current block is located;
obtaining a first intra prediction value of the current block according to sample values of the plurality of reference blocks;
obtaining a residual value of the current block according to the first intra prediction value of the current block and a sample value of the current block; and
generating a bitstream according to the residual value.

60. The method of claim 59, wherein the first intra prediction value of the current block is obtained according to a weighted sum of the sample values of the plurality of reference blocks.

61. The method of claim 59 or 60, wherein the plurality of reference blocks are reference blocks obtained in an Intra Block Copy (IBC) mode and/or an intra Template Matching Prediction (intraTMP) mode.

62. The method of claim 61, wherein the reference block obtained based on the IBC mode is located in the picture where the current block is located.

63. The method of any one of claims 59 to 61, wherein whether the first intra prediction value of the current block is determined by using the coding method is determined according to a numerical value of a first flag bit.

64. The method of any one of claims 59 to 61, wherein when a numerical value of a first flag bit is equal to a first numerical value, whether the first intra prediction value of the current block is determined by using the coding method is determined according to a relationship between a template matching cost of the current block and a reference block obtained in an intra Template Matching Prediction (intraTMP) mode and a first threshold.

65. The method of any one of claims 59 to 61, wherein whether the first intra prediction value of the current block is determined by using the coding method is determined according to a relationship between a template matching cost of the current block and a reference block obtained in an intra Template Matching Prediction (intraTMP) mode and a first threshold.

66. The method of claim 64 or 65, wherein when the template matching cost is equal to or greater than the first threshold, the first intra prediction value of the current block is determined by using the coding method.

67. A decoding apparatus, applied to a decoder, the apparatus comprising:

a first determination module, configured to determine a first reference block of a current block;
a first prediction module, configured to obtain a first intra prediction value of the current block according to sample values of a reconstructed area neighbouring the current block and a sample value of the first reference block; and
a second determination module, configured to determine a reconstructed value of the current block according to the first intra prediction value of the current block.

68. A decoding apparatus, applied to a decoder, the apparatus comprising:

a third determination module, configured to determine a plurality of reference blocks of a current block, wherein the plurality of reference blocks are located in a picture where the current block is located;

a second prediction module, configured to obtain a first intra prediction value of the current block according to sample values of the plurality of reference blocks; and

a second determination module, configured to determine a reconstructed value of the current block according to the first intra prediction value of the current block.

69. A decoder, comprising a first memory and a first processor, wherein the first memory is configured to store a computer program executable on the first processor,

the first processor is configured to perform the method of any one of claims 1 to 25 when executing the computer program, or perform the method of any one of claims 26 to 33 when executing the computer program.

70. A coding apparatus, applied to a coder, the apparatus comprising:

a first determination module, configured to determine a first reference block of a current block;

a first prediction module, configured to obtain a first intra prediction value of the current block according to sample values of a reconstructed area neighbouring the current block and a sample value of the first reference block; and

a generation module, configured to obtain a residual value of the current block according to the first intra prediction value of the current block and a sample value of the current block, and generate a bitstream according to the residual value.

71. A coding apparatus, applied to a coder, the apparatus comprising:

a third determination module, configured to determine a plurality of reference blocks of a current block, wherein the plurality of reference blocks are located in a picture where the current block is located;

a second prediction module, configured to obtain a first intra prediction value of the current block according to sample values of the plurality of reference blocks; and

a generation module, configured to obtain a residual value of the current block according to the first intra prediction value of the current block and a sample value of the current block, and generate a bitstream according to the residual value.

72. A coder, comprising a second memory and a second processor, wherein the second memory is configured to store a computer program executable on the second processor,

the second processor is configured to perform the method of any one of claims 34 to 58 when executing the computer program, or perform the method of any one of claims 59 to 66 when executing the computer program.

73. A bitstream, generated according to a residual value between a first intra prediction value of a current block and a sample value of the current block, wherein the first intra prediction value is obtained through any one of claims 34 to 53, or the first intra prediction value is obtained through any one of claims 59 to 62.

74. An electronic device, comprising:

a processor, configured to execute a computer program; and

a computer-readable storage medium, having stored thereon a computer program, which implements the method of any one of claims 1 to 25 when being executed by the processor, or implements the method of any one of claims 26 to 33 when being executed by the processor, or implements the method of any one of claims 34 to 58 when being executed by the processor, or implements the method of any one of claims 59 to 66 when being executed by the processor.

75. A computer-readable storage medium, having stored thereon a computer program, which implements the method of any one of claims 1 to 25 when being executed, or implements the method of any one of claims 26 to 33 when being executed, or implements the method of any one of claims 34 to 58 when being executed, or implements the method of any one of claims 59 to 66 when being executed.

**FIG. 1**

**FIG. 2**

**FIG. 3**

**FIG. 4**

FIG. 5

FIG. 6

**FIG. 7**

FIG. 8

**FIG. 9**

Template

1001

1003

1002

**FIG. 10**

**FIG. 11**

**FIG. 12**

**FIG. 13**

| |
|---|
| A coder determines a first reference block of a current block | 141 |

| |
|---|
| The coder obtains a first intra prediction value of the current block according to sample values of a reconstructed area adjacent to the current block and a sample value of the first reference block | 142 |

| |
|---|
| The coder obtains a residual value of the current block according to the first intra prediction value of the current block and a sample value of the current block | 143 |

| |
|---|
| A bitstream is generated according to the residual value | 144 |

**FIG. 14**

151

152

**FIG. 15A**

153

**FIG. 15B**

RefT

(x, y)

refL

**FIG. 16**

| | |
|---|---|
| A coder determines multiple reference blocks of a current block. The multiple reference blocks are located in a picture where the current block is located | 171 |
| The coder obtains a first intra prediction value of the current block according to sample values of the multiple reference blocks | 172 |
| The coder obtains a residual value of the current block according to the first intra prediction value of the current block and a sample value of the current block | 173 |
| A bitstream is generated according to the residual value | 174 |

**FIG. 17**

A decoder determines a first reference block of a current block    / 181

The decoder obtains a first intra prediction value of the current block according to sample values of a reconstructed area adjacent to the current block and a sample value of the first reference block    / 182

The decoder determines a reconstructed value of the current block according to the first intra prediction value of the current block    / 183

**FIG. 18**

A decoder determines multiple reference blocks of a current block. The multiple reference blocks are located in a picture where the current block is located    / 191

The decoder obtains a first intra prediction value of the current block according to sample values of the multiple reference blocks    / 192

The decoder determines a reconstructed value of the current block according to the first intra prediction value of the current block    / 193

**FIG. 19**

**FIG. 20**

| | |
|---|---|
| First determination module 211 | Second determination module 213 |
| First prediction module 212 | Decoding apparatus 21 |

**FIG. 21**

| | |
|---|---|
| Third determination module 221 | Second determination module 223 |
| Second prediction module 222 | Decoding apparatus 22 |

**FIG. 22**

| | |
|---|---|
| First determination module 231 | Generation module 233 |
| First prediction module 232 | Coding apparatus 23 |

**FIG. 23**

| | |
|---|---|
| Third determination module 241 | Generation module 243 |
| Second prediction module 242 | Coding apparatus 24 |

**FIG. 24**

25

Decoder

251

First communication
interface

254

253

First processor

252

First memory

**FIG. 25**

26

Decoder

261

Second communication
interface

264

263

Second processor

262

Second memory

**FIG. 26**

## INTERNATIONAL SEARCH REPORT

| International application No. |
| --- |
| **PCT/CN2022/125187** |

| | |
| --- | --- |
| **A.** | **CLASSIFICATION OF SUBJECT MATTER** |

H04N19/52(2014.01)i; H04N19/105(2014.01)i; H04N19/593(2014.01)i; H04N19/176(2014.01)i

According to International Patent Classification (IPC) or to both national classification and IPC

| | |
| --- | --- |
| **B.** | **FIELDS SEARCHED** |

Minimum documentation searched (classification system followed by classification symbols)

    IPC:H04N

Documentation searched other than minimum documentation to the extent that such documents are included in the fields searched

Electronic data base consulted during the international search (name of data base and, where practicable, search terms used)

    CNTXT, ENTXTC, ENTXT, DWPI, WOTXT, USTXT, EPTXT, IEEE, JVET, CNKI: 编码, 解码, 参考块, 样本, 预测, 帧内, 相邻, 重建, 模板, 滤波, 加权, 偏移, 匹配, 块复制, IBC, intraTMP, Encode, decode, reference block, sample, prediction, intra, neighboring, reconstruction, template, filter, weight, offset, match, block copy

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | US 2021297677 A1 (LG ELECTRONICS INC.) 23 September 2021 (2021-09-23) description, paragraphs 0091-0135 and 0148-0198, and figures 4-12 and 18-19 | 1, 4-8, 16-21, 26-30, 34, 37-41, 49-54, 59-63, 67-72, 74-75 |
| A | US 2021297677 A1 (LG ELECTRONICS INC.) 23 September 2021 (2021-09-23) description, paragraphs 0091-0135 and 0148-0198, and figures 4-12 and 18-19 | 2-3, 9-15, 22-25, 31-33, 35-36, 42-48, 55-58, 64-66 |
| X | CN 110290388 A (ZHEJIANG DAHUA TECHNOLOGY CO., LTD.) 27 September 2019 (2019-09-27) description, paragraphs 0024-0074 and 0082-0086 | 1, 16-18, 20, 34, 49-51, 53, 67, 69, 70, 72, 74, 75 |
| A | CN 110290388 A (ZHEJIANG DAHUA TECHNOLOGY CO., LTD.) 27 September 2019 (2019-09-27) description, paragraphs 0024-0074 and 0082-0086 | 2-15, 19, 21-33, 35-48, 52, 54-66, 68, 71 |
| A | CN 113661703 A (TENCENT AMERICA LLC) 16 November 2021 (2021-11-16) entire document | 1-72, 74-75 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 July 2023** | **12 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2022/125187** |

| **Box No. II** | **Observations where certain claims were found unsearchable (Continuation of item 2 of first sheet)** |
| --- | --- |

This international search report has not been established in respect of certain claims under Article 17(2)(a) for the following reasons:

1. ☑ Claims Nos.: **73**
because they relate to subject matter not required to be searched by this Authority, namely:

The subject matter of claim 73 is "a code stream", which belongs to mere presentations of information, and therefore belongs to subject matter for which no search is required by the International Searching Authority.

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

Form PCT/ISA/210 (continuation of first sheet) (July 2022)

| Patent document cited in search report | | | Publication date (day/month/year) | Patent family member(s) | | | Publication date (day/month/year) |
|---|---|---|---|---|---|---|---|
| US | 2021297677 | A1 | 23 September 2021 | WO | 2018021585 | A1 | 01 February 2018 |
| | | | | US | 11234003 | B2 | 25 January 2022 |
| CN | 110290388 | A | 27 September 2019 | | None | | |
| CN | 113661703 | A | 16 November 2021 | US | 2022264114 | A1 | 18 August 2022 |
| | | | | JP | 2022521168 | A | 06 April 2022 |
| | | | | WO | 2021007328 | A1 | 14 January 2021 |
| | | | | KR | 20210107858 | A | 01 September 2021 |
| | | | | US | 2021014504 | A1 | 14 January 2021 |
| | | | | US | 11356675 | B2 | 07 June 2022 |
| | | | | EP | 3997870 | A1 | 18 May 2022 |
| | | | | EP | 3997870 | A4 | 14 June 2023 |

**INTERNATIONAL SEARCH REPORT**
Information on patent family members

International application No.

**PCT/CN2022/125187**

Form PCT/ISA/210 (patent family annex) (July 2022)